(19) Europäisches Patentamt
European Patent Office
Office européen des brevets

(11) **EP 3 030 598 B1**

(12) **EUROPÄISCHE PATENTSCHRIFT**

(45) Veröffentlichungstag und Bekanntmachung des Hinweises auf die Patenterteilung:
**12.02.2020 Patentblatt 2020/07**

(21) Anmeldenummer: **14761802.9**

(22) Anmeldetag: **08.08.2014**

(51) Int Cl.:
*C08H 7/00* (2011.01)     *C08H 8/00* (2010.01)

(86) Internationale Anmeldenummer:
**PCT/EP2014/067134**

(87) Internationale Veröffentlichungsnummer:
**WO 2015/018944 (12.02.2015 Gazette 2015/06)**

(54) **VERFAHREN ZUR GEWINNUNG VON LIGNIN AUS SCHWARZLAUGE UND DADURCH HERGESTELLTE PRODUKTE**

METHOD FOR EXTRACTING LIGNIN FROM BLACK LIQUOR AND PRODUCTS PRODUCED THEREBY

MÉTHODE D'EXTRACTION DE LA LIGNINE DE LA LIQUEUR NOIR ET PRODUITS DÉRIVÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2013 DE 102013013189**

(43) Veröffentlichungstag der Anmeldung:
**15.06.2016 Patentblatt 2016/24**

(73) Patentinhaber: **SunCoal Industries GmbH**
**14974 Ludwigsfelde (DE)**

(72) Erfinder:
• **WITTMANN, Tobias**
**10965 Berlin (DE)**
• **RICHTER, Isabella**
**12849 Berlin (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
WO-A1-2012/117161     CA-A- 903 194
CH-A- 318 820     GB-A- 729 220

• Jan Stemann: "Hydrothermale Carbonisierung: Stoiche und energetische Kreislauührung", , 4 April 2013 (2013-04-04), XP055417215, Retrieved from the Internet: URL:https://depositonce.tu-berlin.de/bitst ream/11303/3881/1/Dokument_2.pdf [retrieved on 2017-10-19]

**Beschreibung**

Die Erfindung betrifft ein Verfahren zur Gewinnung von ungelöstem karbonisiertem Lignin aus Schwarzlauge und dadurch hergestellte Produkte. Weiterhin betrifft die Erfindung das so gewonnene ungelöste karbonisierte Lignin sowie die von diesem abgetrennte karbonisierte Schwarzlauge.

**Definitionen**

Schwarzlauge:

Vorliegend handelt es sich bei Schwarzlauge um eine Lignin beinhaltenden Flüssigkeit die als Ablauge in einem alkalischen Fraktionierungsprozess für Biomasse, z.B. in einem KRAFT-Prozess oder einem Kaliumhydroxyd-Prozess, anfällt. Der pH-Wert der Schwarzlauge liegt im alkalischen Bereich, in der Regel bei einem pH-Wert von 12-14.
Schwarzlauge kann neben Lignin noch weitere organische und anorganische Bestandteile enthalten. Kennzeichnend für Schwarzlauge ist, dass der Ligninanteil an der organischen Trockenmasse bei über 50%, insbesondere bei über 60% oder sogar bei über 70%, und damit deutlich über dem Ligninanteil von holziger Biomasse liegt, der bei 15% - 35% liegt. Mit Ligninanteil ist im Folgenden die Summe aus Klason Lignin und säurelöslichem Lignin gemeint.
Schwarzlauge wird im Folgenden auch als Lignin beinhaltenden Flüssigkeit bezeichnet.

Stabilisiertes Lignin:

Lignin, welches einer hydrothermalen Karbonisierung nach dem erfindungsgemäßen Verfahren bei einer Temperatur in einem Bereich von etwa 150°C bis etwa 280°C, bevorzugt bei zwischen 230°C und 260°C unterzogen wurde, wird im Folgenden als stabilisiertes Lignin bezeichnet. Das stabilisierte Lignin wird auch als karbonisiertes Lignin bezeichnet.
Der Einfachheit halber wird Lignin, das während der hydrothermalen Karbonisierung in karbonisiertes Lignin überführt wird, erst nach Abschluss der hydrothermalen Karbonisierung als karbonisiertes Lignin bezeichnet. Lignin, das während der hydrothermalen Karbonisierung in karbonisiertes Lignin überführt wird, wird als Lignin bezeichnet.

Karbonisierte Schwarzlauge:

Flüssigkeit, die das karbonisierte Lignin nach der hydrothermalen Karbonisierung enthält, wobei das karbonisierte Lignin entweder gelöst und/oder als filtrierbarer Feststoff bzw. fester Kohlenstoff in der Flüssigkeit vorliegen kann, wird im Folgenden als karbonisierte Schwarzlauge bezeichnet. Auch nachdem das ungelöste karbonisierte Lignin von der karbonisierten Schwarzlauge abgetrennt wurde, wird diese noch als karbonisierte Schwarzlauge bezeichnet.
Der Einfachheit halber wird Schwarzlauge, die während der hydrothermalen Karbonisierung in karbonisierte Schwarzlauge überführt wird, erst nach Abschluss der hydrothermalen Karbonisierung als karbonisierte Schwarzlauge bezeichnet. Schwarzlauge, die während der hydrothermalen Karbonisierung in karbonisierte Schwarzlauge überführt wird, wird als Schwarzlauge bezeichnet.

Gelöstes Lignin / gelöstes karbonisiertes Lignin:

Lignin wird im Folgenden als in der Schwarzlauge gelöstes Lignin bzw. als in der karbonisierten Schwarzlauge gelöstes karbonisiertes Lignin bezeichnet, wenn es nicht durch eine Filtration mittels eines Filterpapiers mit einer Porengröße von < 10 μm aus der Schwarzlauge oder der karbonisierten Schwarzlauge abgetrennt werden kann.

Ungelöstes Lignin / ungelöstes karbonisiertes Lignin:

Lignin wird im Folgenden als in der Schwarzlauge ungelöstes Lignin bzw. als in der karbonisierten Schwarzlauge ungelöstes karbonisiertes Lignin bezeichnet, wenn es durch eine Filtration mittels eines Filterpapiers mit einer Porengröße von < 10 μm oder mittels Zentrifugation oder Dekantation aus der Schwarzlauge oder der karbonisierten Schwarzlauge abgetrennt werden kann. Ungelöstes karbonisiertes Lignin wird im Folgenden auch als fester Kohlenstoff bezeichnet.

Fester Kohlenstoff:

Vorliegend handelt es sich bei einem festen Kohlenstoff um ein ungelöstes karbonisiertes Lignin. Kennzeichnend für den festen Kohlenstoff ist, dass der Anteil des chemischen Elementes Kohlenstoff bezogen auf die organische Trockensubstanz nicht bei 100% oder annähernd 100% liegt. Neben dem chemischen Element Kohlenstoff sind auch die chemischen Elemente Sauerstoff und Wasserstoff, sowie andere chemischen Elemente in dem im Folgenden als festen Kohlenstoff bezeichneten Feststoff vorhanden.

Fällung von gelöstem Lignin / Fällung von gelöstem karbonisiertem Lignin:

Mit Fällung oder Ausfällung ist im Folgenden eine überwiegende Überführung von mehr als 50%, bevorzugt von mehr als 60%, besonders bevorzugt von mehr als 70% des gelösten Lignins bzw. gelösten karbonisierten Lignins in ungelöstes Lignin bzw. ungelöstes karbonisiertes Lignin gemeint. Z.B. kann durch Fällung von gelöstem karbonisiertem Lignin fester Kohlenstoff gewonnen werden.

Trockenmasse:

Die Trockenmasse ist der Eindampfrückstand einer Flüssigkeit, gewonnen bei einer Eindampfung unter Umgebungsdruck bei 105°C bis zur Gewichtskonstanz.

Organische Trockenmasse:

Die organische Trockenmasse ist die Trockenmasse abzüglich der bei einer Veraschung bei 815°C bis zur Gewichtskonstanz zurückbleibenden Asche.

Ausbeute des ungelösten karbonisierten Lignins:

Unter Ausbeute des festen Kohlenstoffs bzw. des ungelösten karbonisierten Lignins ist im Folgenden der Quotient aus der organischen Trockenmasse des ungelösten karbonisierten Lignins (Zähler) und der organischen Trockenmasse der Schwarzlauge (Nenner) gemeint. Die organische Trockenmasse des ungelösten karbonisierten Lignins wird nach dessen Abtrennung von der karbonisierten Schwarzlauge ermittelt. Die organische Trockenmasse der Schwarzlauge wird vor deren Zufuhr zu dem erfindungsgemäßen Verfahren ermittelt.

Korngrößenverteilung:

Unter Korngrößenverteilung wird im Folgenden die Q3 - Verteilung verstanden. Die Messung der Korngrößenverteilung des Lignins oder des karbonisierten Lignins erfolgt in einer Suspension mittels Laserbeugung ohne vorherige Trocknung des Lignins oder des karbonisierten Lignins. Vor und/oder während der Messung der Korngrößenverteilung wird die zu vermessende Probe mit Ultraschall solange dispergiert, bis eine über mehrere Messungen stabile Korngrößenverteilung erhalten wird.

Kolloidales (ungelöstes) karbonisiertes Lignin:

Unter kolloidalem (ungelöstem) karbonisiertem Lignin soll im Folgenden eine Suspension aus ungelöstem karbonisierten Lignin in einer Flüssigkeit verstanden werden, wobei das ungelöste karbonisierte Lignin bei einem Trockenstoffanteil von > 1% in der Flüssigkeit kein Sediment ausbildet, sondern homogen in dieser verteilt ist. Die homogene Verteilung des ungelösten karbonisierten Lignins in der Flüssigkeit wird durch eine ausreichend starke Polarität der festen Kohlenstoffpartikel erreicht. Der D90 der Partikelgrößenverteilung des kolloidalen karbonisiertes Lignins liegt in der Regel bei weniger als 60 $\mu$m und der D50 bei in der Regel weniger als 20 $\mu$m. Bei ausreichender Dispergierung mit Ultraschall liegt der D90 der Partikelgrößenverteilung des kolloidalen karbonisierten Lignins in der Regel bei weniger als 30 $\mu$m, der D50 bei in der Regel weniger als 10 $\mu$m. Die Korngrößenverteilung des kolloidalen karbonisierten Lignins ist in der Regel unimodal.

Sediment von ungelösten karbonisierte Lignin:

Ein Sediment von ungelösten karbonisierten Lignin bildet sich dann aus, wenn die Polarität und/oder die Partikelgrößenverteilung des ungelösten karbonisierten Lignins so angelegt ist, dass mindestens 90% des ungelösten karbonisierten Lignins unter Einwirkung der Schwerkraft innerhalb von maximal 5 Minuten eine Sedimentschicht ausbilden.

Unter Feinsediment von ungelöstem karbonisierten Lignin soll im Folgenden verstanden werden, dass der D90 der Partikelgrößenverteilung bei weniger als 1000 $\mu$m liegt.

Unter Grobsediment soll im Folgenden verstanden werden, dass der D90 der Partikelgrößenverteilung bei

mehr als 1000 $\mu$m liegt.

Off-Gas aus der hydrothermalen Karbonisierung:

Mit Off-Gas aus der hydrothermalen Karbonisierung ist im folgendes das während einer hydrothermalen Karbonisierung entstehende nicht kondensierbare Gas gemeint. Das Off-Gas besteht in der Regel zu mindestens 90 Vol.-% (Volumenprozent) aus Kohlendioxid.

**Beschreibung**

Schwarzlauge fällt als Nebenprodukt von alkalischen Fraktionierungsprozessen von holziger Biomasse z.B. Holz, Stroh, verholztes Graß, etc. an. Während eines Fraktionierungsprozesses wird das in der holzigen Biomasse vorhandene Lignin unter alkalischen Bedingungen typischer Weise bei Temperaturen bis zu 170 °C in Lösung gebracht und dann von den unter diesen Bedingungen nicht löslichen Bestandteilen der holziger Biomasse abgetrennt. Ein Beispiel für einen solchen alkalischen Fraktionierungsprozess ist der Herstellung von Zellstoff nach dem KRAFT-Verfahren in einem Zellstoffwerk. Neben dem gelösten Lignin beinhaltet Schwarzlauge weitere organische Bestandteile und den überwiegenden Anteil der im Fraktionierungsprozess eingesetzten Kochchemikalien. Diese werden in der Regel in der sogenannten Chemikalienrückgewinnung des Fraktionierungsprozesses zurückgewonnen. Die Chemikalienrückgewinnung aus der Schwarzlauge erfolgt nach dem Stand der Technik im Wesentlichen zweistufig, wobei zunächst eine Eindampfung und damit verbunden eine Aufkonzentration des Trockenstoffgehaltes der Schwarzlauge erfolgt. Anschließend wird der Ligninanteil der Schwarzlauge in einem Recovery Boiler verbrannt und die Verbrennungsrückstände aufbereitet und so die darin enthaltenen Kochchemikalien zurückgewonnen. Die bei der Verbrennung des Ligninanteils freiwerdende Energie wird zur Wärme- und Stromerzeugung genutzt.

In einigen Zellstoffwerken arbeiten die Recovery Boiler an ihrer maximal möglichen Leistungsgrenze, so dass eine weitere Kapazitätsseigerung des Zellstoffwerkes nur erreicht werden kann, indem ein neuer Recovery Boiler errichtet wird oder die Menge an zu verbrennendem Lignin in der Schwarzlauge reduziert wird, z.B. durch eine Abtrennung des Lignins von der Schwarzlauge.

Eine Abtrennung von Lignin aus Schwarzlauge vor deren Verbrennung kann zum Beispiel durch Fällung des Lignins mittels mit der Schwarzlauge sauer reagierender Gase, organischer oder anorganischer Säuren gefolgt von einer Fest-Flüssig-Trennung erfolgen. Das so gewonnene Rohlignin hat aufgrund noch vorhandener Verunreinigungen insbesondere durch die Kochchemikalien einen Ascheanteil von 15 Massenprozent bis 30 Massenprozent (15 Ma.-% - 30 Ma.-%) und muss in der Regel als Abfallstoff entsorgt werden. Es hat sich herausgestellt, dass dieses Rohlignin durch eine weitere Wäsche zum Beispiel mit einer Säure so weit von anorganischen Verunreinigungen befreit werden kann, dass es zum Beispiel in Zementwerken oder Energieerzeugungsanlagen als Brennstoff genutzt werden kann.

Typischerweise wird jedoch nicht aus der gesamten Menge an Schwarzlauge, die in einem alkalischen Fraktionierungsprozess anfällt, Lignin abgetrennt. Von der gesamten Menge an anfallender Schwarzlauge wird vielmehr nur so viel Schwarzlauge einem Abtrennverfahren für Lignin zugeführt, wie erforderlich ist, um eine erforderliche Entlastung des Recovery Boilers zu erreichen. In einem alternativen Ansatz wird dem Abtrennverfahren für Lignin maximal so viel Schwarzlauge zugeführt, dass im Recovery Boiler aus der verbleibenden Schwarzlauge noch genügend Energie für dessen Betrieb gewonnen werden kann.

In einem optimierten, zweistufigen Verfahren nach dieser Lehre (LignoBoost-Verfahren) wird der pH-Wert der Schwarzlauge erst mittels Kohlendioxid leicht auf etwa 9,5 - 10,5 gesenkt und dabei ein Teil des Lignins gefällt. Anschließend werden Lignin und Schwarzlauge in einer mechanischen Entwässerung voneinander getrennt. Die nur leicht im pH-Wert reduzierte Schwarzlauge wird nach der Abtrennung des gefällten Lignins zurück in das Zellstoffwerk geführt. Das mechanisch entwässerte Lignin wird mit Wasser resuspendiert und der pH-Wert der Suspension mit Schwefelsäure auf etwa 2 eingestellt. Die Suspension wird anschließend mechanisch entwässert, der sich bildende Filterkuchen mit saurem Waschwasser gewaschen und so ein Aschegehalt im Filterkuchen von unter 5 Ma.-% erreicht. Das Filtrat aus der zweiten mechanischen Entwässerung wird in der Regel in das Zellstoffwerk zurückgeführt, um die darin enthaltenen Kochchemikalien zurückgewinnen zu können. Das Waschwasser wird in der Regel genutzt, um die Suspension nach der ersten Entwässerung herzustellen. Vorteil einer solchen optimierten Verfahrensführung ist die Sicherstellung einer optimalen Rückführbarkeit der Schwarzlauge nach der Abtrennung des gefällten Lignins durch die nur leichte Ansäuerung im ersten Verfahrensschritt sowie der geringe Aschegehalt des Lignins nach der sauren Wäsche im zweiten Verfahrensschritt, der eine Vermarktung des Lignins, z.B. als Brennstoff, ermöglicht. Nachteil sind die Auswirkungen der Integration eines solchen Verfahrens auf die Bilanz der Kochchemikalien des Zellstoffwerkes, insbesondere wenn das Filtrat aus der zweiten Entwässerungsstufe und somit der darin enthaltene Schwefel in das Zellstoffwerk zurückgeführt wird. Nachteilig sind auch die hohen Betriebskosten die durch den Einsatz von Kohlendioxid und der Notwendigkeit der Abtrennung des mit der Schwefelsäure eingetragenen Schwefels verursacht werden, sowie die geringen Erlöse, die beim Einsatz von Lignin als Brennstoff erwirtschaftet werden können. Diesen Stand der Technik geben zum Beispiel WO 2013/070130 A1, WO 2013/002687 A1, WO 2012/177198 A1, WO 2010/143997 A1 oder WO 2009/104995 A1 wieder.

Für eine weitere Aufbereitung des nach den oben beschriebenen optimierten, zweistufigen Verfahren aus der Schwarzlauge abgetrennten und gereinigten Lignins zu einem wertgesteigerten, festen Kohlenstoff, bietet es sich an, das gereinigte Lignin einer hydrothermalen Karbonisierung zuzuführen und so zu einem festen Kohlenstoff zu veredeln.

Nach dem Stand der Technik wird organisches Material in einer hydrothermalen Karbonisierung bei Temperaturen zwischen 150°C und 300°C im Beisein von flüssigem Wasser und bei einem Druck, der über dem Sattdampfdruck liegt, für eine Dauer von 30 Minuten bis 24 Stunden behandelt. Das Reaktionswasser hat vor Beginn der hydrothermalen Karbonisierung in der Regel einen neutralen oder durch Zugabe einer Säure einen sauren pH-Wert. Nach Abschluss einer hydrothermalen Karbonisierung liegt der pH-Wert deutlich im sauren Bereich. Nach dem Stand der Technik wird eine hydrothermale Karbonisierung durch die Zugabe von Säuren, z.B. Zitronensäure, katalysiert. Die sich bei einer hydrothermalen Karbonisierung aus der Biomasse bildenden Säuren wirken auch autokatalytisch. Das Ergebnis einer hydrothermalen Karbonisierung ist ein fester Kohlenstoff, der gegenüber dem Einsatzstoff einen erhöhten Kohlenstoffgehalt und einen reduzierten Sauerstoffgehalt aufweist (WO 2010/112230 A1).

In Versuchen wurde nun gefunden, dass nach dem oben dargestellten zweistufigen Verfahren (LignoBoost-Verfahren) aus Schwarzlauge gewonnenes Lignin, welches als Einsatzstoff einer hydrothermalen Karbonisierung unterzogen wird, während dieser feste Ablagerungen am verwendeten Reaktionsgefäß bildet, welche einen Produktionsbetrieb behindern bzw. unmöglich machen. Weiterer Nachteil einer hydrothermalen Karbonisierung des nach dem Stand der Technik aus Schwarzlauge gewonnenen Lignins ist der anlagentechnische Aufwand der durch die Kombination des zweistufigen Fäll- und Reinigungsverfahrens mit einer hydrothermalen Karbonisierung nach dem Stand der Technik entsteht.

Eine direkte hydrothermale Karbonisierung von Schwarzlauge ist nicht Stand der Technik. Im nächstgelegenen Stand der Technik (WO 2012/091906 A1) wird vorgeschlagen, Schwarzlauge bei einer Temperatur zwischen 250 °C und 300 °C hydrothermal zu behandeln und so den wasserunlöslichen Anteil an Feststoffen um mindestens 40 % zu reduzieren. Ziel dieses Standes der Technik ist es, das Lignin in der Schwarzlauge durch eine hydrothermale Behandlung zu depolymerisieren, um die so entstehenden wasserlöslichen, phenolischen Oligomere und Monomere durch Filtration gut von Feststoffen abtrennen zu können und nachfolgenden chemischen Prozessen als Einsatzstoff zuführen zu können. Dieser Stand der Technik erreicht im Ergebnis keine Abtrennung des Lignins von der Schwarzlauge.

Aufgabe der Erfindung ist es, die Nachteile des Standes der Technik bei der Abtrennung von Lignin aus Schwarzlauge zu überwinden.

Die Aufgabe wird insbesondere mit den Verfahren der Ansprüche 1 und 14 gelöst.

Grundgedanke dieser Verfahren ist, dass

- Schwarzlauge aus einem alkalischen Fraktionierungsprozess einer hydrothermalen Karbonisierung unterzogen wird,
- von der karbonisierten Schwarzlauge ein ungelöstes karbonisiertes Lignin abgetrennt wird,
- die verbleibende karbonisierte Schwarzlauge zurück in den alkalischen Fraktionierungsprozess geführt wird und
- das von der karbonisierten Schwarzlauge abgetrennte ungelöstes karbonisierte Lignin gereinigt wird.

Ein erfindungsgemäßes Verfahren nach dem Anspruch 1, mittels dem Lignin aus Schwarzlauge abgetrennt wird, sieht dabei vor

- Schwarzlauge aus einem alkalischen Fraktionierungsprozess, mit einem Trockenstoffgehalt von mindestens 20 Ma.-% in einer ersten Prozessstufe (hydrothermale Karbonisierung) einer hydrothermalen Karbonisierung zu unterziehen, wobei

  ◦ der pH-Wert der Schwarzlauge vor oder während der hydrothermalen Karbonisierung oder der pH-Wert der karbonisierten Schwarzlauge nach der hydrothermalen Karbonisierung so weit reduziert wird, dass mit einer Ausbeute von mindestens 20 Ma.-% ungelöstes karbonisiertes Lignin gewonnen wird, und
  ◦ der pH-Wert der Schwarzlauge vor und während der hydrothermalen Karbonisierung und pH-Wert der karbonisierten Schwarzlauge nach der hydrothermalen Karbonisierung mindestens einen Wert von 7 haben,

- ungelöstes karbonisiertes Lignin, in einer zweiten Prozessstufe (Entwässerung) weitgehend von der karbonisierten Schwarzlauge abgetrennt wird und die karbonisierte Schwarzlauge dem alkalischen Fraktionierungsprozess wieder zugeführt wird,
- die anorganischen Bestandteile des von der karbonisierten Schwarzlauge abgetrennten ungelösten karbonisierten Lignins in einer dritten Prozessstufe (Reinigung) durch eine Wäsche reduziert werden und
- das ungelöste karbonisierte Lignin mit einem Trockenstoffgehalt von mehr als 40 Ma.-% gewonnen wird.

Im Rahmen eines erfindungsgemäßen Verfahrens wird somit Schwarzlauge einer hydrothermalen Karbonisierung unterzogen, ein ungelöstes karbonisiertes Lignin von der karbonisierten Schwarzlauge abgetrennt und anschließend von anorganischen Verunreinigungen befreit, wobei durch Einstellung des pH-Wertes eine Ausbeute des ungelösten karbonisieren Lignins von über 20 Ma.-% erreicht wird. Hierbei kann selbstverständlich vorgesehen sein, der pH-Wert der Schwarzlauge vor und/oder während der hydrothermalen Karbonisierung und/oder der pH-Wert der karbonisierten Schwarzlauge nach der hydrothermalen Karbonisierung so weit reduziert werden, dass mit einer Ausbeute von mindestens 20 Ma.-% ungelöstes karbonisiertes Lignin gewonnen wird. Eine gezielte Reduzierung des pH-Wertes kann somit insbesondere vor, während und nach der hydrothermalen Karbonisierung vorgenommen sein.

Durch ein erfindungsgemäßes Verfahren kann Lignin von Schwarzlauge abgetrennt und zu einem festen Kohlenstoff in der Form von ungelöstem karbonisierten Lignin aufgewertet werden, wobei eine hohe Ausbeute erzielt wird. Hierdurch ist die Abtrennung von Lignin aus Schwarzlauge gegenüber dem Stand der Technik deutlich vereinfacht. Beispielsweise kann die Abtrennung des Lignins und dessen Aufwertung zu einem festen Kohlenstoff bzw. ungelöstem karbonisiertem Lignin bei einem pH-Wert über 7 erfolgen. Zusätzlich kann durch Anwendung des erfindungsgemäßen Verfahrens auf die Qualität des ungelösten karbonisierten Lignins Einfluss genommen werden, insbesondere auf dessen Korngrößenverteilung, auf den Anteil des chemischen Elementes Kohlenstoff an der organischen Trockenmasse des ungelösten karbonisierten Lignins oder auf die Erweichungstemperatur des ungelösten karbonisierten Lignins. Im Übrigen lässt sich auf der Basis des erfindungsgemäßen Verfahrens erreichen, dass das ungelöste karbonisierte Lignin von anorganischen Bestandteilen gereinigt wird.

Nach dem Stand der Technik kann von anorganischen Bestandteilen gereinigtes Lignin im industriellen Maßstab nur durch das sogenannte LignoBoost-Verfahren (siehe oben) gewonnen werden. Kennzeichnend für das LignoBoost-Verfahren ist, dass die Abtrennung und Reinigung des Lignins zweistufig erfolgt, wobei in einer ersten Stufe das Lignin aus der Schwarzlauge ausgefällt und von dieser abgetrennt wird und in einer zweiten Stufe, dass abgetrennte Lignin in einer Flüssigkeit resuspendiert wird und durch Zugabe von Schwefelsäure ein pH-Wert von zwischen 2 - 4 eingestellt wird. Das resuspendierte Lignin wird sodann von der Flüssigkeit abgetrennt und mit einer Säure gewaschen.

Das vorliegende erfindungsgemäße Verfahren vereinfacht den Stand der Technik erheblich, insbesondere wird nicht das in dem oben beschrieben zweistufigen Fällungs- und Reinigungsprozess gewonnenen Lignin einer hydrothermalen Karbonisierung zugeführt, sondern die Schwarzlauge. Weiterhin unterscheidet sich das erfindungsgemäße Verfahren vom Stand der Technik dadurch, dass die hydrothermale Karbonisierung weder durch die Einstellung eines sauren pH-Wertes von < 7 katalysiert wird, noch dass durch eine Autokatalyse während der hydrothermalen Karbonisierung ein pH-Wert von < 7 erreicht wird. Erfindungsgemäße liegen der pH-Wert der Schwarzlauge vor und während der hydrothermalen Karbonisierung und der pH-Wert der karbonisierten Schwarzlauge nach der hydrothermalen Karbonisierung bei mindestens 7, wodurch eine alkalische hydrothermale Karbonisierung erfolgt.

In einer Ausführungsvariante ist vorgesehen, dass der pH-Wert der Schwarzlauge vor und während der hydrothermalen Karbonisierung und der pH-Wert der karbonisierten Schwarzlauge nach der hydrothermalen Karbonisierung mindestens einen Wert von 8 haben.

Alternativ oder ergänzend kann vorgesehen sein, dass das ungelöste karbonisierte Lignin in einer zweiten Prozessstufe (Entwässerung) bei einem pH-Wert von mindestens 7 - in einer Variante bei einem pH-Wert von mindestens 8 - weitgehend von der karbonisierten Schwarzlauge abgetrennt wird und die karbonisierte Schwarzlauge dem alkalischen Fraktionierungsprozess wieder zugeführt wird.

Das erfindungsgemäße Verfahren kann dadurch verbessert werden, dass die hydrothermale Karbonisierung bei einer Temperatur zwischen 180°C und 300°C durchgeführt wird, vorzugweise in einem Bereich von etwa 200 °C und etwa 280 °C. In einer Variante wird die hydrothermale Karbonisierung in einem Bereich von etwa 210 °C bis etwa 270 °C, vorzugsweise zwischen 230 °C und 260 °C durchgeführt.

In einem Ausführungsbeispiel beträgt die Dauer der hydrothermalen Karbonisierung zwischen 60 und 600 Minuten, vorzugsweise zwischen 60 und 300 Minuten, in einer Weiterbildung liegt sie in einem Bereich von 120 bis 240 Minuten.

In einer Verfahrensvariante wird die Schwarzlauge der ersten Prozessstufe mit einem Trockenstoffgehalt von mindestens 25 Ma.-% zugeführt, in einer Weiterbildung mit einem Trockenstoffgehalt von mindestens 30 Ma.-%. Bevorzugt wird der Trockenstoffgehalt der Schwarzlauge, die der ersten Prozessstufe zugeführt wird, auf einen Wert von 50 Ma.-% begrenzt.

Die Dauer der hydrothermalen Karbonisierung kann so gewählt sein, dass der pH-Wert der karbonisierten Schwarzlauge um mindestens eine halbe Einheit, bevorzugt um mindestens eine Einheit unter dem pH-Wert der Schwarzlauge vor der hydrothermalen Karbonisierung liegt. In einer Ausführungsvariante ist die Dauer der hydrothermalen Karbonisierung so gewählt, dass der pH-Wert der karbonisierten Schwarzlauge um mindestens 1,5 Einheiten, vorzugweise um mindestens zwei Einheiten unter dem pH-Wert der Schwarzlauge vor der hydrothermalen Karbonisierung liegt.

Alternativ oder ergänzend kann die Temperatur der hydrothermalen Karbonisierung so gewählt werden, dass der pH-Wert der karbonisierten Schwarzlauge um mindestens eine halbe Einheit unter dem pH-Wert der Schwarzlauge vor der hydrothermalen Karbonisierung liegt. In einer Ausführungsvariante ist die Temperatur der hydrothermalen Karbonisierung so gewählt, dass der pH-Wert der karbonisierten Schwarzlauge um mindestens eine Einheit, oder sogar um mindestens 1,5 Einheiten unter dem pH-Wert der Schwarzlauge vor der hydrothermalen Karbonisierung liegt. In einer Weiterbildung ist die Temperatur der hydrothermalen Karbonisierung so gewählt, dass der pH-Wert der karbonisierten Schwarzlauge um mindestens zwei Einheiten unter dem pH-Wert der Schwarzlauge vor der hydrothermalen Karbonisierung liegt.

In einer weiteren Ausführungsvariante sind sowohl die Dauer als auch die Temperatur der hydrothermalen Karbonisierung so gewählt und aufeinander abgestimmt, dass der pH-Wert der karbonisierten Schwarzlauge um die zuvor genannten Werten unter dem pH-Wert der Schwarzlauge vor der hydrothermalen Karbonisierung liegt.

Des Weiteren kann vorgesehen sein, dass der pH-Wert der Schwarzlauge vor der hydrothermalen Karbonisierung abgesenkt wird. Hierbei wird beispielsweise ein pH-Wert unter 12, vorzugsweise ein pH-Wert unter 11 oder sogar unter 10 eingestellt. Ein pH-Wert von 9 wird vorzugsweise jedoch nicht unterschritten. Für die Absenkung des pH-Wertes kann z.B. ein mit der Schwarzlauge sauer reagierendes Gas, beispielsweise Kohlendioxid und/oder Off-Gas aus der hydrothermalen Karbonisierung eingesetzt werden.

Des Weiteren kann vorgesehen sein, dass der pH-Wert der karbonisierten Schwarzlauge vor der zweiten Prozessstufe abgesenkt wird. Hierbei wird beispielsweise ein pH-Wert unter 10, vorzugsweise ein pH-Wert unter 9 eingestellt. In einer Variante wird jedoch ein pH-Wert von 7, vorzugsweise von 8 nicht unterschritten. Für die Absenkung des pH-Wertes kann z.B. ein mit der karbonisierten Schwarzlauge sauer reagierendes Gas, beispielsweise Kohlendioxid und/oder Off-Gas aus der hydrothermalen Karbonisierung eingesetzt werden. Alternativ oder zusätzlich kann auch eine Säure, wie z.B. Schwefelsäure, genutzt werden.

Sind neben dem Lignin in der Schwarzlauge andere organische Polymere, zum Beispiel Biomasse, wie Holz, Stroh, Gras, etc., Zellulose, Hemicellulose und/oder deren Abbauprodukte, z.B. Glukose etc., vorhanden, so werden aus diesen organischen Polymeren und deren Abbauprodukten während der hydrothermalen Karbonisierung organische Säuren gebildet, die eine Absenkung des pH-Wertes während der hydrothermalen Karbonisierung bewirken. In diesem Zusammenhang kann vorgesehen sein, dass in einer Ausführungsvariante der pH-Wert während der hydrothermalen Karbonisierung durch die Erhöhung des Anteils an Biomasse, wie Holz, Stroh, Gras, Zellulose, Hemicellulose und/oder deren Abbauprodukte in der Schwarzlauge vor und/oder während der hydrothermalen Karbonisierung abgesenkt wird, wobei jedoch ein pH-Wert von 7 bevorzugt von 8 nicht unterschritten wird.

In einer Ausführungsvariante ist alternativ oder ergänzend zu den vorgenannten Merkmalen vorgesehen, dass der pH-Wert der Schwarzlauge während der hydrothermalen Karbonisierung um mindestens eine Einheit und maximal auf einen pH-Wert von 8 absinkt.

Eine Variante des erfindungsgemäßen Verfahrens kann weiterhin vorsehen, dass eine definierte Korngrößenverteilung des ungelösten karbonisierten Lignins erhalten wird, indem der pH-Wert der Schwarzlauge vor und/oder während der hydrothermalen Karbonisierung so eingestellt wird, dass nach der hydrothermalen Karbonisierung entweder ein kolloidales karbonisiertes Lignin oder ein Sediment an karbonisiertem Lignin gewonnen wird.

In einem Ausführungsbeispiel wird ein Ascheanteil des ungelösten karbonisierten Lignins durch die Wäsche in der dritten Prozessstufe auf maximal 10 Ma.-% abgesenkt. In einer Weiterbildung wird der Ascheanteil hierbei auf maximal 7 Ma.-%, vorzugsweise auf maximal 5 Ma.-% abgesenkt. Das ungelöste karbonisierte Lignin kann hierfür in der dritten Prozessstufe mit einer Flüssigkeit, vorzugsweise mit Wasser oder einer Säure, insbesondere mit Schwefelsäure gewaschen werden. Dementsprechend kann das ungelöste karbonisierte Lignins in der dritten Prozessstufe mit einer Flüssigkeit gewaschen und so ein Ascheanteil des ungelösten karbonisierten Lignins auf maximal 10 Ma.-%, in einer Weiterbildung auf maximal 7 Ma.-%, vorzugsweise auf maximal 5 Ma.-% abgesenkt werden.

In einem Ausführungsbeispiel liegt der pH-Wert der zur Reinigung des ungelösten karbonisierten Lignin genutzten (Wasch-) Flüssigkeit nach der Reinigung des ungelösten karbonisierten Lignins in der dritten Prozessstufe bei mindestens 7, bevorzugt bei mindestens 8.

Der pH-Wert der für die Reinigung des ungelösten karbonisierten Lignins in der dritten Prozessstufe eingesetzten (Wasch-) Flüssigkeit weicht in einem Ausführungsbeispiel maximal eine halbe Einheit von dem pH-Wert der karbonisierten Schwarzlauge vor der zweiten Prozessstufe ab.

Alternativ oder ergänzend weicht der pH-Wert der für die Reinigung des ungelösten karbonisierten Lignins in der dritten Prozessstufe eingesetzten (Wasch-) Flüssigkeit maximal eine halbe Einheit von dem pH-Wert des ungelösten karbonisierten Lignins nach der zweiten Prozessstufe ab. Der pH-Wert des ungelösten karbonisierten Lignins nach der zweiten Prozessstufe kann beispielweise in einer 10 %-igen Suspension einer Probe des ungelösten karbonisierten Lignins mit destilliertem Wasser gemessen werden.

Die oben aufgeführten Varianten eines erfindungsgemäßen Verfahrens können selbstverständlich auch untereinander kombiniert werden.

Im Folgenden werden exemplarisch weitere mögliche Ausführungsformen des erfindungsgemäßen Verfahrens offenbart, die jeweils mit den zuvor genannten Varianten und Merkmalen kombiniert werden können.

Eine Ausführungsform des erfindungsgemäßen Verfahrens ist zum Beispiel dadurch gekennzeichnet, dass der alkalische Fraktionierungsprozess, aus dem die Schwarzlauge stammt und dem die karbonisierte Schwarzlauge wieder zugeführt wird, zur Herstellung von Zellstoff in einem Zellstoffwerk eingesetzt ist.

Vor diesem Hintergrund wird gemäß einem weiteren Aspekt der Erfindung ein Verfahren nach dem Anspruch 14 vorgeschlagen, dass die gestellte Aufgabe ebenfalls löst. Hierbei ist vorgesehen, dass

- Schwarzlauge mit einem Trockenstoffgehalt von mindestens 20 Ma.-% aus einem Zellstoffwerk in einer ersten Prozessstufe (hydrothermale Karbonisierung) bei einer Temperatur zwischen 180°C und 300°C mindestens 60 Minuten und maximal 600 Minuten einer hydrothermalen Karbonisierung unterzogen wird, wobei

  ◦ der pH-Wert während der hydrothermalen Karbonisierung um mindestens eine Einheit und maximal auf einer pH-Wert von 8 absinkt und
  ◦ dabei aus der Schwarzlauge mit einer Ausbeute von mindestens 20 Ma.-% ungelöstes karbonisiertes Lignin (bzw. ein fester Kohlenstoff) ausfällt,

- das ungelöste karbonisierte Lignin in einer zweiten Prozessstufe (Entwässerung) weitgehend von der karbonisierten Schwarzlauge abgetrennt wird,
- die karbonisierte Schwarzlauge dem Zellstoffwerk wieder zugeführt wird,
- die anorganischen Bestandteile des von der karbonisierten Schwarzlauge abgetrennten ungelösten karbonisierten Lignins in einer dritten Prozessstufe (Reinigung) durch eine Wäsche reduziert werden und
- das ungelöste karbonisierte Lignin mit eine Trockenstoffgehalt von mehr als 40 Ma.-% gewonnen wird.

Die im Zusammenhang mit einem erfindungsgemäßen Verfahren gemäß dem ersten Aspekt der Erfindung genannten Vorteile und Merkmale sind dabei im Wesentlichen auch mit einem Verfahren gemäß dem zweiten Aspekt kombinier- und erzielbar, so dass auf die vorstehenden Ausführungen verwiesen wird.

In einer Ausführungsform eines erfindungsgemäßen Verfahrens wird die dritte Prozessstufe innerhalb der zweiten Prozessstufe bevorzugt in einer Siebbandpresse, Kammerfilterpresse oder Membranfilterpresse als Filterkuchenwäsche realisiert (Reinigung in einem Schritt).

Eine solche Ausführungsform eines erfindungsgemäßen Verfahrens zur Abtrennung von Lignin aus Schwarzlauge aus einem alkalischen Fraktionierungsprozess ist dann insbesondere dadurch gekennzeichnet, dass

- Schwarzlauge mit einem Trockenstoffgehalt von mindestens 20 Ma.-% in einer ersten Prozessstufe (hydrothermale Karbonisierung) einer hydrothermalen Karbonisierung unterzogen wird, wobei
- der pH-Wert der Schwarzlauge vor oder während der hydrothermalen Karbonisierung oder der pH-Wert der karbonisierten Schwarzlauge nach der hydrothermalen Karbonisierung so weit reduziert wird, dass mit einer Ausbeute von mindestens 20 Ma.-% ungelöstes karbonisiertes Lignin gewonnen wird und der pH-Wert der Schwarzlauge vor und während der hydrothermalen Karbonisierung und der pH-Wert der karbonisierten Schwarzlauge nach der hydrothermalen Karbonisierung mindestens einen Wert von 7, bevorzugt mindestens einen Wert von 8, haben,
- das ungelöste karbonisierte Lignin in der zweiten Prozessstufe (Entwässerung) bei einem pH-Wert von mindestens 7, bevorzugt von mindestens 8, weitgehend von der karbonisierten Schwarzlauge abgetrennt wird, wobei ein Filterkuchen gewonnen wird und die karbonisierte Schwarzlauge dem alkalischen Fraktionierungsprozess wieder zugeführt wird,
- die anorganischen Bestandteile des von der karbonisierten Schwarzlauge abgetrennten ungelösten karbonisierten Lignins in einer dritten Prozessstufe (Reinigung) durch eine sich direkt anschließende Filterkuchenwäsche reduziert werden, und
- ungelöstes karbonisiertes Lignin mit eine Trockenstoffgehalt von mehr als 40 Ma.-% gewonnen wird.

Vorteil dieser Ausführungsform ist, dass für die Realisierung der zweiten und dritten Prozessstufe nur eine Anlage/Maschine vorgesehen werden muss. Diese Ausführungsform unterscheidet sich somit beispielweise dadurch vom Stand der Technik, dass die Abtrennung des Lignins in einem Verfahrensschritt erfolgt. Insbesondere wird auf eine Resuspendierung des in der zweiten Prozessstufe von der karbonisierten Schwarzlauge abgetrennten ungelösten karbonisierten Lignins verzichtet.

In einer anderen bevorzugten Ausführungsform eines erfindungsgemäßen Verfahrens wird die dritte Prozessstufe im Anschluss an die zweite Prozessstufe realisiert (Reinigung in 2 Schritten).

Hierbei wird dann beispielsweise

- ein aus der zweiten Prozessstufe ausgetragener Filterkuchen bestehend aus ungelöstem karbonisiertem Lignin (bzw. festem Kohlenstoff) und nicht abgetrennter, karbonisierter Schwarzlauge mit einer Waschflüssigkeit vermischt und mit dieser gewaschen,
- das gewaschene ungelöste karbonisierte Lignin anschließend wieder von der Waschflüssigkeit getrennt und

- optional der so gewonnene Filterkuchen vor dem Austrag aus der dritten Prozessstufe in einer Filterkuchenwäsche weiter von anorganischen Bestandteilen befreit.

Diese Ausführungsform kann dadurch weitergebildet werden, indem

- ein aus der zweiten Prozessstufe ausgetragener Filterkuchen bestehend aus ungelöstem karbonisiertem Lignin (bzw. festem Kohlenstoff) und nicht abgetrennter, karbonisierter Schwarzlauge mit einer Waschflüssigkeit, bevorzugt mit einer Säure, vermischt und mit dieser gewaschen wird,
- das gewaschene ungelöste karbonisierte Lignin anschließend wieder von der Waschflüssigkeit bevorzugt durch eine Siebbandpresse, Kammerfilterpresse oder Membranfilterpresse getrennt wird und
- optional der so gewonnene Filterkuchen vor dem Austrag aus der dritten Prozessstufe in einer Filterkuchenwäsche bevorzugt mit Wasser oder eine Säure weiter von anorganischen Bestandteilen befreit wird.

Eine Ausführungsform des erfindungsgemäßen Verfahrens ist zum Beispiel dadurch gekennzeichnet, dass

- Schwarzlauge aus dem alkalischen Fraktionierungsverfahren mit einem Trockenstoffgehalt von mindestens 20 Ma.-% in einer ersten Prozessstufe (hydrothermale Karbonisierung) einer hydrothermalen Karbonisierung unterzogen wird, wobei

- der pH-Wert der Schwarzlauge vor der hydrothermalen Karbonisierung so weit reduziert wird, dass Lignin aus der Schwarzlauge ausfällt,

- der pH-Wert der Schwarzlauge ggf. darüber hinaus während oder der pH-Wert der karbonisierten Schwarzlauge nach der hydrothermalen Karbonisierung so weit reduziert wird, dass mit einer Ausbeute von mindestens 20 Ma.-% ungelöstes karbonisiertes Lignin gewonnen wird und der pH-Wert der Schwarzlauge vor und während hydrothermalen Karbonisierung und der pH-Wert der karbonisierten Schwarzlauge nach der hydrothermalen Karbonisierung mindestens einen Wert von 7, bevorzugt mindestens einen Wert von 8, haben,

- das ungelöste karbonisierte Lignin in einer zweiten Prozessstufe (Entwässerung) bei einem pH-Wert von mindestens 7, bevorzugt von mindestens 8, weitgehend von der karbonisierten Schwarzlauge abgetrennt wird und die karbonisierte Schwarzlauge dem alkalischen Fraktionierungsverfahren wieder zugeführt wird,

- die anorganischen Bestandteile des von der karbonisierten Schwarzlauge abgetrennten ungelösten karbonisierten Lignins in einer dritten Prozessstufe (Reinigung) durch eine Wäsche reduziert werden und

- das ungelöste karbonisierte Lignin mit einem Trockenstoffgehalt von mehr als 40 Ma.-% gewonnen wird.

In dieser Ausführungsform des erfindungsgemäßen Verfahrens wird das Lignin, welches zunächst gelöst in der Schwarzlauge vorliegt, ausgefällt und dann der hydrothermalen Karbonisierung zugeführt. Auch hier handelt es sich bei der Schwarzlauge um Ablauge aus einem alkalischen Fraktionierungsverfahren. Diese Ausführungsform des erfindungsgemäßen Verfahrens beinhaltet also einen Fällungsschritt vor der hydrothermalen Karbonisierung, in dem der pH-Wert der Schwarzlauge so weit abgesenkt wird, dass Lignin aus dieser ausfällt, bevorzugt auf einen Wert zwischen 9,5 und 10,5. Zur Absenkung des pH-Wertes können Säuren oder Gase, die mit der Schwarzlauge sauer reagieren, eingesetzt werden. Bevorzugt wird $CO_2$ und/oder Off-Gas aus der hydrothermalen Karbonisierung für die Absenkung des pH-Wertes eingesetzt.

Eine andere Ausführungsform des erfindungsgemäßen Verfahrens ist zum Beispiel dadurch gekennzeichnet, dass

- Schwarzlauge mit einem Trockenstoffgehalt von mindestens 20 Ma.-% in einer ersten Prozessstufe (hydrothermale Karbonisierung) einer hydrothermalen Karbonisierung unterzogen wird, wobei

- der pH-Wert der Schwarzlauge vor der hydrothermalen Karbonisierung so liegt oder so eingestellt wird, dass Lignin in der Schwarzlauge gelöst ist,

- der pH-Wert der Schwarzlauge während der hydrothermalen Karbonisierung oder pH-Wert der karbonisierten Schwarzlauge nach der hydrothermalen Karbonisierung so weit reduziert wird, dass mit einer Ausbeute von mindestens 20 Ma.-% ungelöstes karbonisiertes Lignin gewonnen wird und der pH-Wert der Schwarzlauge vor und während der hydrothermalen Karbonisierung und der pH-Wert der karbonisierten Schwarzlauge nach der hydrothermalen Karbonisierung mindestens einen Wert von 7, bevorzugt einen Wert von mindestens 8, hat,

- das ungelöste karbonisierte Lignin in einer zweiten Prozessstufe (Entwässerung) bei einem pH-Wert von mindestens 7, bevorzugt von mindestens 8, weitgehend von der karbonisierten Schwarzlauge abgetrennt wird und die karbonisierte Schwarzlauge dem alkalischen Fraktionierungsverfahren wieder zugeführt wird,

- die anorganischen Bestandteile des von der karbonisierten Schwarzlauge abgetrennten ungelösten karbonisierten Lignins in einer dritten Prozessstufe (Reinigung) durch eine Wäsche reduziert werden und

- das ungelöste karbonisierte Lignin mit einem Trockenstoffgehalt von mehr als 40 Ma.-% gewonnen wird.

In dieser Ausführungsform des erfindungsgemäßen Verfahrens ist das Lignin vor der hydrothermalen Karbonisierung in der Schwarzlauge gelöst. Auch hier handelt es sich bei der Schwarzlauge um Ablauge aus einem alkalischen Fraktionierungsverfahren. Lignin, welches nicht in der Schwarzlauge gelöst ist, kann zunächst durch Erhöhung des pH-Wertes in Lösung gebracht und dann als gelöstes Lignin der hydrothermalen Karbonisierung zugeführt werden. Das gelöste Lignin wird in dieser Ausführungsform zumindest teilweise während der hydrothermalen Karbonisierung ausgefällt. Nach der hydrothermalen Karbonisierung kann eine weitere Fällung des noch in der das karbonisierten Schwarzlauge gelösten karbonisierte Lignins erfolgen, wobei ein pH-Wert von 7, bevorzugt von 8, nicht unterschritten wird.

Eine Variante des erfindungsgemäßen Verfahrens kann weiterhin vorsehen, dass die Ausbeute von mindestens 20 Ma.-% an ungelöstem karbonisiertem Lignin zu mindestens 50%, beispielsweise zu mindestens 60%, bevorzugt zu mindestens 70%, während der hydrothermalen Karbonisierung erzielt wird. Dies kann erreicht werden, indem mindestens 50%, bevorzugt mindestens 60%, des in der zweiten Prozessstufe von der karbonisierten Schwarzlauge abgetrennten ungelösten karbonisierten Lignins während der hydrothermalen Karbonisierung aus in der Schwarzlauge gelöstem Lignin gewonnen werden. Dabei wird - wie zuvor dargestellt - die Dauer und/oder Temperatur und/oder die pH-Wert-Absenkung der Schwarzlauge vor und/oder während der hydrothermalen Karbonisierung so gewählt und eingestellt, dass die Ausbeute von mindestens 20 Ma.-% an ungelöstem karbonisiertem Lignin zu mindestens 50%, beispielsweise zu mindestens 60%, bevorzugt zu mindestens 70%, während der hydrothermalen Karbonisierung erzielt wird. Insbesondere sieht eine solche Ausführungsform zusammenfassend somit vor,

- Schwarzlauge aus einem alkalischen Fraktionierungsprozess, mit einem Trockenstoffgehalt von mindestens 20 Ma.-% in einer ersten Prozessstufe (hydrothermale Karbonisierung) einer hydrothermalen Karbonisierung zu unterziehen, wobei

    ◦ der pH-Wert der Schwarzlauge vor, während oder der karbonisierten Schwarzlauge nach der hydrothermalen Karbonisierung so weit reduziert wird, dass mit einer Ausbeute von mindestens 20 Ma.-% ungelöstes karbonisiertes Lignin gewonnen wird,
    ◦ der pH-Wert der Schwarzlauge vor, während und der karbonisierten Schwarzlauge nach der hydrothermalen Karbonisierung mindestens einen Wert von 7, hat und
    ◦ mindestens 50%, beispielsweise zu mindestens 60%, bevorzugt zu mindestens 70%, der Ausbeute des ungelösten karbonisierten Lignins während der hydrothermalen Karbonisierung erzielt wird,

- ungelöstes karbonisiertes Lignin, in einer zweiten Prozessstufe (Entwässerung) weitgehend von der karbonisierten Schwarzlauge abgetrennt wird und die karbonisierte Schwarzlauge dem alkalischen Fraktionierungsprozess wieder zugeführt wird,

- die anorganischen Bestandteile des von der karbonisierten Schwarzlauge abgetrennten ungelösten karbonisierten Lignins in einer dritten Prozessstufe (Reinigung) durch eine Wäsche reduziert werden und

- das ungelöste karbonisierte Lignin mit einem Trockenstoffgehalt von mehr als 40 Ma.-% gewonnen wird.

Im Folgenden werden exemplarisch noch zwei alternative Ausführungsbeispiele für ein erfindungsgemäßes Verfahren offenbart.

So kann ein Verfahren zur Abtrennung von Lignin aus Schwarzlauge vorgesehen sein, in dem

- Schwarzlauge mit einem Trockenstoffgehalt von mindestens 20 Ma.-% in einer ersten Prozessstufe (hydrothermale Karbonisierung) einer hydrothermalen Karbonisierung unterzogen wird, wobei

- der pH-Wert der Schwarzlauge vor oder während der hydrothermalen Karbonisierung oder der pH-Wert der karbonisierten Schwarzlauge nach der hydrothermalen Karbonisierung so weit reduziert wird, dass mit einer Ausbeute von mindestens 20 Ma.-% ungelöstes karbonisiertes Lignin gewonnen wird und

- die Korngrößenverteilung des ungelösten karbonisierten Lignins durch Anpassung des pH-Wertes der Schwarzlauge vor und/oder während der hydrothermalen Karbonisierung so eingestellt wird, dass sich ein kolloidaler fester Kohlenstoff bzw. kolloidales ungelöstes karbonisiertes Lignin bildet wobei der pH-Wert der Schwarzlauge vor und während der hydrothermalen Karbonisierung einen Wert von 10 nicht unterschreitet, und die karbonisierten Schwarzlauge nach der hydrothermalen Karbonisierung mindestens einen pH-Wert von 7, bevorzugt von 8, hat,

- das ungelöste karbonisierte Lignin in einer zweiten Prozessstufe (Entwässerung) bei einem pH-Wert von mindestens 7, bevorzugt von mindestens 8, weitgehend von der karbonisierten Schwarzlauge abgetrennt wird und die karbonisierte Schwarzlauge dem alkalischen Fraktionierungsverfahren wieder zugeführt wird,

- die anorganischen Bestandteile des von der karbonisierten Schwarzlauge abgetrennten ungelösten karbonisierten Lignins in einer dritten Prozessstufe (Reinigung) durch eine Wäsche reduziert werden und

- das ungelöste karbonisierte Lignin mit einem Trockenstoffgehalt von mehr als 40 Ma.-% gewonnen wird.

In dieser Ausführungsvariante wird durch Einstellung des pH-Wertes der Schwarzlauge erreicht, dass sich ein kolloidales ungelöstes karbonisierte Lignin bildet. Hierzu liegt der pH-Wert vor und während der hydrothermalen Karbonisierung bei einem Wert von >= 10. Durch diese Einstellung des pH-Wertes wird erreicht, dass eine Polymerisation des Lignins während der hydrothermalen Karbonisierung unterdrückt wird. Weiterhin wird erreicht, dass die Partikelgrößenverteilung und die funktionellen Gruppen des karbonisierten Lignins so angelegt sind, dass sich ein kolloidales ungelöstes karbonisierte Lignin bildet. Bevorzugt wird das kolloidale ungelöste karbonisierte Lignin durch eine Filtration bei einer Temperatur von bevorzugt mindestens 60°C von der der karbonisierten Schwarzlauge abgetrennt.

In einer zweiten alternativen Variante ist ein Verfahren vorgesehen, in dem

- Schwarzlauge mit einem Trockenstoffgehalt von mindestens 20 Ma.-% in einer ersten Prozessstufe (hydrothermale Karbonisierung) einer hydrothermalen Karbonisierung unterzogen wird, wobei

- der pH-Wert der Schwarzlauge vor, während oder der karbonisierten Schwarzlauge nach der hydrothermalen Karbonisierung so weit reduziert wird, dass mit einer Ausbeute von mindestens 20 Ma.-% ungelöstes karbonisiertes Lignin gewonnen wird und

- die Korngrößenverteilung des ungelösten karbonisierten Lignins durch Anpassung des pH-Wertes der Schwarzlauge vor und/oder während der hydrothermalen Karbonisierung so eingestellt wird, dass sich Feinsediment an ungelöstem karbonisierten Lignin bildet und die karbonisierten Schwarzlauge nach der hydrothermalen Karbonisierung einen pH-Wert von mindestens 7, bevorzugt von mindestens 8, hat,

- das ungelöste karbonisierte Lignin in einer zweiten Prozessstufe (Entwässerung) bei einem pH-Wert von mindestens 7, bevorzugt von mindestens 8, weitgehend von der karbonisierten Schwarzlauge abgetrennt wird und die karbonisierte Schwarzlauge dem alkalischen Fraktionierungsverfahren wieder zugeführt wird,

- die anorganischen Bestandteile des von der karbonisierten Schwarzlauge abgetrennten ungelösten karbonisierten Lignins in einer dritten Prozessstufe (Reinigung) durch eine Wäsche reduziert werden und

- das ungelöste karbonisierte Lignin mit einem Trockenstoffgehalt von mehr als 40 Ma.-% gewonnen wird.

Bevorzugt liegt hierbei der pH-Wert der Schwarzlauge vor der hydrothermalen Karbonisierung bei > 7, besonders bevorzugt bei > 8, und während der hydrothermalen Karbonisierung zwischen 7 und 11, besonders bevorzugt zwischen 8 und 10.

In dieser Ausführungsvariante wird durch Einstellung des pH-Werts der Schwarzlauge erreicht, dass sich ein Feinsediment an ungelöstem karbonisiertem Lignin bildet. Hierzu ist bevorzugt vor der hydrothermalen Karbonisierung eine pH-Wert von > 8 vorzusehen. Während der hydrothermalen Karbonisierung ist bevorzugt ein pH-Wert zwischen 8 und 11 vorzusehen. Durch diese Einstellung des pH-Wertes wird erreicht, dass die Bildung von groben Partikeln durch eine Polymerisation des Lignins während der hydrothermalen Karbonisierung weitgehend unterdrückt wird. Weiterhin wird erreicht, dass Partikelgrößenverteilung und die funktionellen Gruppen des karbonisierten Lignins so angelegt sind, dass sich ein Feinsediment an karbonisiertem Lignin bildet.

Im Rahmen der Erfindung werden ferner die durch Anwendung eines erfindungsgemäßen Verfahrens entstehenden (Zwischen-) Produkte, d.h., ein fester Kohlenstoff bzw. ungelöstes karbonisiertes Lignin und eine karbonisierte Schwarzlauge, jeweils mit spezifischen Eigenschaften, vorgeschlagen.

Die im Folgenden beschriebe Qualität des ersten Produkts, des ungelösten karbonisierten Lignins, wird dabei nach der dritten Prozessstufe eines erfindungsgemäßen Verfahrens, der Reinigung, erreicht. Die im Folgenden beschriebe Qualität des zweiten Produkts, der karbonisierten Schwarzlauge, wird nach der zweiten Prozessstufe eines erfindungsgemäßen Verfahrens, der Entwässerung, erreicht.

Das erste erfindungsgemäße Produkt ist dadurch gekennzeichnet, dass

- der Anteil des chemischen Elementes Kohlenstoff bezogen auf die aschefreie und trockene Masse bei mindestens 60 Ma.-%, beispielsweise bei mindestens 65 Ma.-%, bevorzugt bei mindestens 68 Ma.-% liegt,
- der Anteil des chemischen Elementes Kohlenstoff bezogen auf die aschefreie und trockene Masse um mindestens 5 Ma.-%, bevorzugt um mindestens 8 Ma.-%, höher liegt als der Anteil des chemischen Elementes Kohlenstoff eines aschefreien und trockenen Rückstandes, der bei einer kompletten Eindampfung der als Ausgangstoff verwendeten Schwarzlauge gewonnen wird,
- der Ascheanteil bezogen auf die trockene Masse bei maximal 10 Ma.-%, beispielsweise bei maximal 7 Ma.-%, bevorzugt bei maximal 5 Ma.-% liegt,
- der Ascheanteil bezogen auf die trockene Masse um mindestens 50 Ma.-% bevorzugt mindestens 60 Ma.-% niedriger liegt als der Ascheanteil eines trockenen Rückstandes, der bei einer kompletten Eindampfung der als Ausgangstoff verwendeten Schwarzlauge gewonnenen,
- die Erweichungstemperatur bei mindestens 200 °C liegt und
- der Trockenstoffgehalt bei mindestens 40 Ma.-% liegt

Das erste erfindungsgemäße Produkt unterscheidet sich von Lignin, welches durch das oben beschriebe zweistufige Verfahren (LignoBoost) nach dem Stand der Technik von Schwarzlauge abgetrennt wird insbesondere dadurch dass, der Anteil des chemischen Elementes Kohlenstoff und die Erweichungstemperatur jeweils höher liegen.

Das zweite erfindungsgemäße Produkt ist dadurch gekennzeichnet, dass

- der Anteil des chemischen Elementes Kohlenstoff des aus der karbonisierten Schwarzlauge gewonnenen aschefreien und trockenen Rückstandes bei mindestens 60 Ma.-%, beispielsweise bei mindestens 65 Ma.-% weiter bevorzugt bei mindestens 68 Ma.-% liegt und
- vorzugsweise der Anteil des chemischen Elementes Kohlenstoff eines aus der karbonisierten Schwarzlauge gewonnenen aschefreien und trockenen Rückstandes um mindestens 5 Ma.-%, bevorzugt um mindestens 8 Ma.-%, höher liegt als der Anteil des chemischen Elementes Kohlenstoff eines aschefreien und trockenen Rückstandes, der bei einer kompletten Eindampfung der als Ausgangstoff verwendeten Schwarzlauge gewonnen wird.

Das zweite erfindungsgemäße Produkt unterscheidet sich von der Schwarzlauge, welche durch das oben beschriebe zweistufige Verfahren nach dem Stand der Technik in der ersten Entwässerung von Schwarzlauge abgetrennt wurde insbesondere dadurch, dass der Anteil des chemischen Elementes Kohlenstoff und damit der Heizwert bei gleichem Wassergehalt höher liegt.

**Spezifische Ausführungsbeispiele**

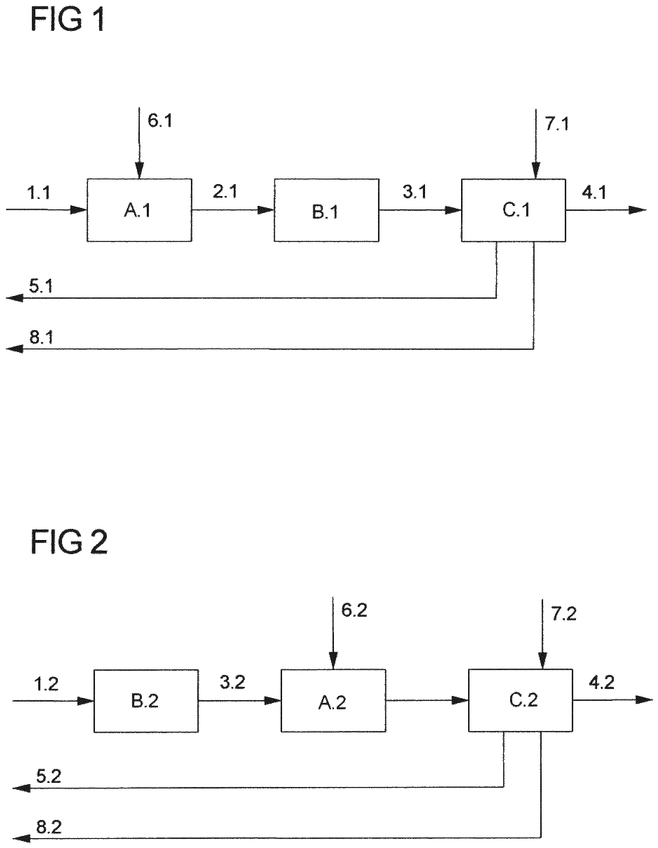

Nachfolgend werden noch weitere Ausführungsbeispiele erläutert, die zusätzlich in den beigefügten Figuren 1 bis 5 näher veranschaulicht sind.

Ausführungsbeispiel 1 (FIG 1):

Im Ausführungsbeispiel 1 wird ein erfindungsgemäßes Verfahren zur Abtrennung und Aufwertung von Lignin aus Schwarzlauge aus einem alkalischen Fraktionierungsprozess nach dem KRAFT-Verfahren angewandt, in dem Kiefernholz verarbeitet wird. Durch das Verfahren wird ein Feinsediment an ungelöstem karbonisiertem Lignin (festem Kohlenstoff) mit einer Ausbeute von etwa 34 Ma.-% bzw. etwa 40 Ma.-% gewonnen. Das Ausführungsbeispiel wird in FIG 1 illustriert.

Die Schwarzlauge (1.1) wird aus der Eindampfanlage des KRAFT-Verfahrens mit einem Trockenstoffgehalt von etwa 20 Ma.-%. Der pH-Wert der Schwarzlauge beträgt etwa 13. Das Lignin ist in der Schwarzlauge gelöst.

Zunächst wird der pH-Wert der Schwarzlauge durch Einleitung von $CO_2$ (6.1) in einer Vorrichtung zur pH-Absenkung (A.1) auf etwa 10,5 abgesenkt. Die so vorbehandelte Schwarzlauge (2.1) wird über eine Dauer von 3 Stunden und bei einer Temperatur von 250°C in einer hydrothermalen Karbonisierung (B.1, erste Prozessstufe) hydrothermal karbonisiert. Während der hydrothermalen Karbonisierung fällt karbonisiertes Lignin aus der Schwarzlauge aus. Aufgrund der Prozessführung kann auch vor der hydrothermalen Karbonisierung in der Vorrichtung zur pH-Absenkung (A.1) Lignin aus der Schwarzlauge ausfallen. Der überwiegende Teil - etwa 70 % der Ausbeute an ungelöstem karbonisiertem Lignin, welches nach mechanischer Entwässerung in (C.1) gewonnen wird - fällt jedoch während der hydrothermalen Karbonisierung aus. Der pH-Wert der karbonisierten Schwarzlauge (3.1) beträgt nach der hydrothermalen Karbonisierung etwa 9,5. Das karbonisierte Lignin ist aus der Schwarzlauge als fester Kohlenstoff ausgefallen. Der feste Kohlenstoff wird von der karbonisierten Schwarzlauge durch eine mechanische Entwässerung (C.1) in einer Filterpresse abgetrennt und so ein Filterkuchen gewonnen. Das dabei gewonnene Filtrat (5.1) wird in die Eindampfanlage des KRAFT-Verfahrens zurückgeführt. Anschließend wird der Filterkuchen mit Wasser (7.1) gewaschen. Das Waschwasser wird nach der Wäsche (8.1) ebenfalls in die Eindampfanlage des KRAFT-Verfahrens zurückgeführt. Der gewaschene Filterkuchen (4.1) besteht aus einem Feinsediment an ungelöstem karbonisiertem Lignin und verbleibendem Wasser und wird aus dem Verfahren ausgetragen.

Die Ausbeute an ungelöstem karbonisiertem Lignin liegt in diesem Ausführungsbeispiel bei etwa 34 Ma.-%. Der Anteil des chemischen Elementes Kohlenstoff bezogen auf die organische Trockenmasse des ungelösten karbonisierten Lignins liegt bei etwa 70 Ma.-%. Der Ascheanteil des ungelösten karbonisierten Lignins liegt bei etwa 7 Ma.-%.

Wird in dem gleichen Ausführungsbeispiel Schwarzlauge mit einem Trockenstoffgehalt von etwa 30 Ma.-% bei sonst unveränderter Prozessführung eingesetzt, so erhöht sich die Ausbeute an ungelöstem karbonisiertem Lignin auf etwa 40 Ma.-%. Der Anteil des chemischen Elementes Kohlenstoff bezogen auf die organische Trockenmasse des ungelösten karbonisierten Lignins liegt bei etwa 69 Ma.-%. Der Ascheanteil des an ungelösten karbonisierten Lignins liegt bei etwa 6 Ma.-%.

Ausführungsbeispiel 2 (FIG 2):

Im Ausführungsbeispiel 2 wird ein erfindungsgemäßes Verfahren zur Abtrennung und Aufwertung von Lignin aus Schwarzlauge aus einem alkalischen Fraktionierungsprozess nach dem KRAFT-Verfahren angewandt, in dem Kiefernholz verarbeitet wird. Durch das Verfahren wird ein Feinsediment an ungelöstem karbonisiertem Lignin (festem Kohlenstoff) mit einer Ausbeute von etwa 25 Ma.-% gewonnen. Das Ausführungsbeispiel wird in FIG 2 illustriert.

Die Schwarzlauge (1.2) wird aus der Eindampfanlage des KRAFT-Verfahrens mit einem Trockenstoffgehalt von 20 Ma.-% entnommen. Der pH-Wert der Schwarzlauge beträgt etwa 13. Das Lignin ist in der Schwarzlauge gelöst.

Die Schwarzlauge (1.2) wird über eine Dauer von 3 Stunden und bei einer Temperatur von 250°C in einer hydrothermalen Karbonisierung (B.2) hydrothermal karbonisiert. Der pH-Wert der karbonisierten Schwarzlauge (3.2) beträgt nach der hydrothermalen Karbonisierung etwa 10,5. Anschließend wird der pH-Wert der Schwarzlauge durch Einleitung von $CO_2$ (6.2) in einer Vorrichtung zur pH-Absenkung (A.2) auf etwa 8,5 abgesenkt. Ungelöstes karbonisiertes Lignin wird von der karbonisierten Schwarzlauge durch eine mechanische Entwässerung (C.2) durch Filtration abgetrennt. Das dabei gewonnene Filtrat (5.2) wird in die Eindampfanlage des KRAFT-Verfahrens zurückgeführt. Anschließend wird der Filterkuchen mit Wasser (7.2) gewaschen. Das Waschwasser wird nach der Wäsche (8.2) ebenfalls in die Eindampfanlage des KRAFT-Verfahrens zurückgeführt. Der gewaschene Filterkuchen (4.2) besteht aus einem Feinsediment an ungelöstem karbonisiertem Lignin und verbleibendem Wasser und wird aus dem Verfahren ausgetragen.

Die Ausbeute an ungelöstem karbonisiertem Lignin liegt in diesem Ausführungsbeispiel bei etwa 25 Ma.-%. Der Anteil des chemischen Elementes Kohlenstoff bezogen auf die organische Trockenmasse des ungelösten karbonisierten Lignins liegt bei etwa 70 Ma.-%. Der Ascheanteil des ungelösten karbonisierten Lignins liegt bei etwa 6 Ma.-%.

Ausführungsbeispiel 3:

Im Ausführungsbeispiel 2 wird ein erfindungsgemäßes Verfahren zur Abtrennung und Aufwertung von Lignin aus Schwarzlauge aus einem alkalischen Fraktionierungsprozess nach dem KRAFT-Verfahren angewandt, in dem Eukalyptusholz verarbeitet wird. Durch das Verfahren wird ungelöstes karbonisiertes Lignin (fester Kohlenstoff) mit einer Ausbeute von etwa 56 Ma.-% gewonnen.

13,34 g Schwarzlauge mit einem Trockenstoffgehalt von 20,54 Massenprozent (ermittelt durch Trocknung der Schwarzlauge bei 105 °C) werden in einen Autoklav der Firma Parr Instruments gegeben. Der pH-Wert der Schwarzlauge liegt bei 12,9. Der Autoklav wird verschlossen und auf 250°C erhitzt. Nach der Aufheizphase wird die Temperatur des Autoklavs drei Stunden bei 250 °C gehalten. Anschließend wird der Autoklav auf Umgebungstemperatur zurückgekühlt und geöffnet. Die karbonisierte Schwarzlauge wird in einer Filternutsche mit einer Porengröße von < 2 μm gefiltert. Der Filterkuchen hat einen Trockenstoffgehalt von 30% Der abfiltrierte Kohlenstoff wird anschließend bei 105 °C getrocknet. Es werden 1,11 g fester und trockener Kohlenstoff in Form von ungelöstem karbonisiertem Lignin gewonnen. Die karbonisierte Schwarzlauge hat einen pH-Wert von 9,5. Der Anteil der chemischen Elemente Kohlenstoff, - Wasserstoff- und Stickstoff und Aschegehalt sowohl des bei der Trocknung der Schwarzlauge entstehenden Rückstands als auch des von der karbonisierten Schwarzlauge abfiltrierten trockenen Kohlenstoffs werden in einer Elementaranalyse ermittelt und sind im Folgenden dargestellt.

|  | C | H | N | Asche |
|---|---|---|---|---|
| **Schwarzlauge, trocken** | 38,4 | 3,62 | 0,23 | 36,6 |
| **Schwarzlauge, trocken und aschefrei** | 60,6 | 5,71 | 0,36 | - |
| **Fester Kohlenstoff, trocken** | 57,6 | 3,41 | 0,45 | 12,2 |
| **Fester Kohlenstoff, trocken und aschefrei** | 65,6 | 3,88 | 0,51 | - |

Erhöhung des Kohlenstoffanteils:

$$( \ 65,6 - 60,6 \ ) \ / \ 60,6 = 8,3 \ \%$$

Absenkung des Ascheanteils:

$$( \ 36,6 - 12,2 \ ) \ / \ 36,6 = 66,6 \ \%$$

Absenkung des pH-Wertes:

$$12,9 - 9,5 = 3,4$$

Ausbeute an festem Kohlenstoff (inklusive Asche):

$$1,11 \ g \ / \ ( \ 13,34 \ g \ * \ 20,54 \ \% \ ) = 1,11 \ g \ / \ 2,74 \ g = 40,5 \ \%$$

Ausbeute an festem Kohlenstoff (ohne Asche):

$$1,11g \ * \ (1- \ 12,2 \ \% \ ) \ / \ ( \ 13,34 \ g \ * \ 20,54 \ \% \ * \ (1- \ 36,6 \ \%) \ ) = 56 \ \%$$

Anschließen wurde der feste Kohlenstoff mit Schwefelsäure gewaschen wodurch der Aschegehalt auf 3,2 % reduziert wurde.
Absenkung des Ascheanteils nach saurer Wäsche:

$$( \ 36,6 - 3,2 \ ) \ / \ 36,6 = 91,3 \ \%$$

Ausführungsbeispiel 4:

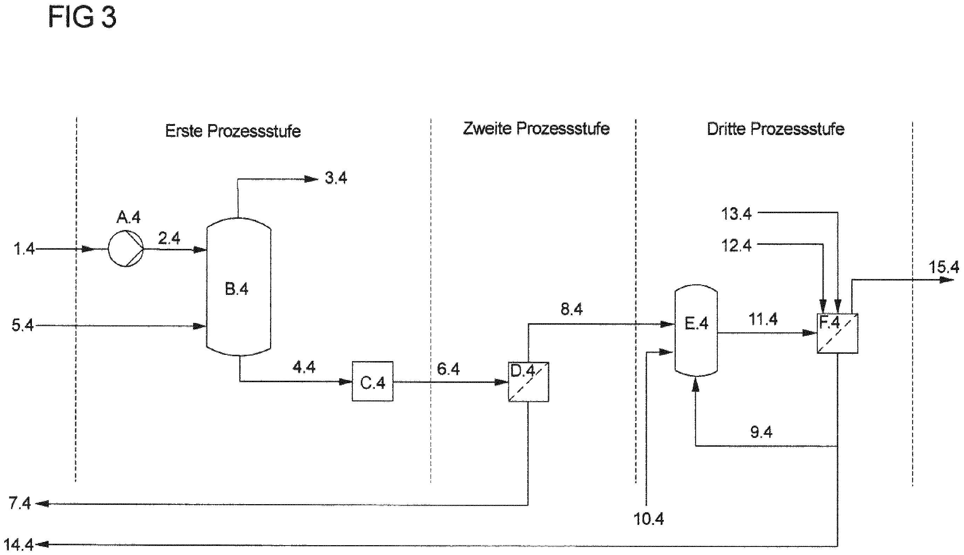

Ein weiteres Ausführungsbeispiel ist in FIG 3 dargestellt.
Schwarzlauge (1.4) mit einem pH-Wert von 13 wird aus der Eindampfanlage eines Zellstoffwerks mit 30 Ma.-% Trockenstoffanteil entnommen und der ersten Prozessstufe zugeführt. Mittels einer Pumpe (A.4) wird eine Druckerhöhung auf etwa 30 bar vorgenommen und die Schwarzlauge (2.4) einem Reaktor (B.4) zugeführt, in dem die hydrothermale Karbonisierung bei einer Temperatur von 230°C über eine Dauer von 3 Stunden stattfindet. Der Reaktor (B.4) wird mit Heizdampf (5.4) beheizt. Während der Reaktion entstehende Prozessgase ($CO_2$, $CH_4$, CO, $H_2S$, etc.) werden als Off-gas (3.4) druckgeregelt aus dem Reaktor (B.4) abgeleitet und aus dem Prozess abgeführt. Während der hydrothermalen Karbonisierung fällt ungelöstes karbonisiertes Lignin (fester Kohlenstoff) aus der Schwarzlauge aus. Die karbonisierte Schwarzlauge und das ausgefallene ungelöste karbonisierte Lignin (4.4) werden aus dem Reaktor (B.4) abgeführt und in einer Entspannung/Rückkühlungs-Vorrichtung (C.4) auf Umgebungsdruck entspannt und auf etwa 60°C zurückgekühlt. Die karbonisierte Schwarzlauge und das ausgefallene ungelöste karbonisierte Lignin (6.4) werden anschließend einer (ersten) Entwässerung, einer Membranfilterpresse (D.4) in der zweiten Prozessstufe zugeführt. In der Membranfilterpresse (D.4) wird ein Filterkuchen bestehend aus ungelöstem karbonisiertem Lignin und verbleibender karbonisierter Schwarzlauge gewonnen. Die von dem Filterkuchen abgetrennte karbonisierte Schwarzlauge (7.4) wird zurück in das Zellstoffwerk geführt. Der Filterkuchen (8.4) wird der dritten Prozessstufe zugeführt und dort in einer Vorrichtung zur Vermischung (E.4) mit Filtraten einer weiteren (zweiten) Entwässerung (9.4) vermischt und der pH-Wert durch Zugabe einer Säure (10.4) auf 4 eingestellt. Die so gewonnene Suspension (11.4) bestehend aus ungelöstem karbonisiertem Lignin und der Waschflüssigkeit wird der zweiten Entwässerung (F.4) zugeführt, wo ein Filterkuchen aus festem Kohlenstoff gewonnen wird. Der Filterkuchen wird anschließend in einer Verdrängungswäsche durch Zugabe von Wasser (12.4) und einer Säure (13.4) gewaschen. Die Waschflüssigkeit (14.4) wird aus dem Prozess abgeführt. Der gewaschene Filterkuchen wird als ungelöstes karbonisiertes Lignin (15.4) aus der 2. Entwässerung (F.4) abgeführt.

Ausführungsbeispiel 5:

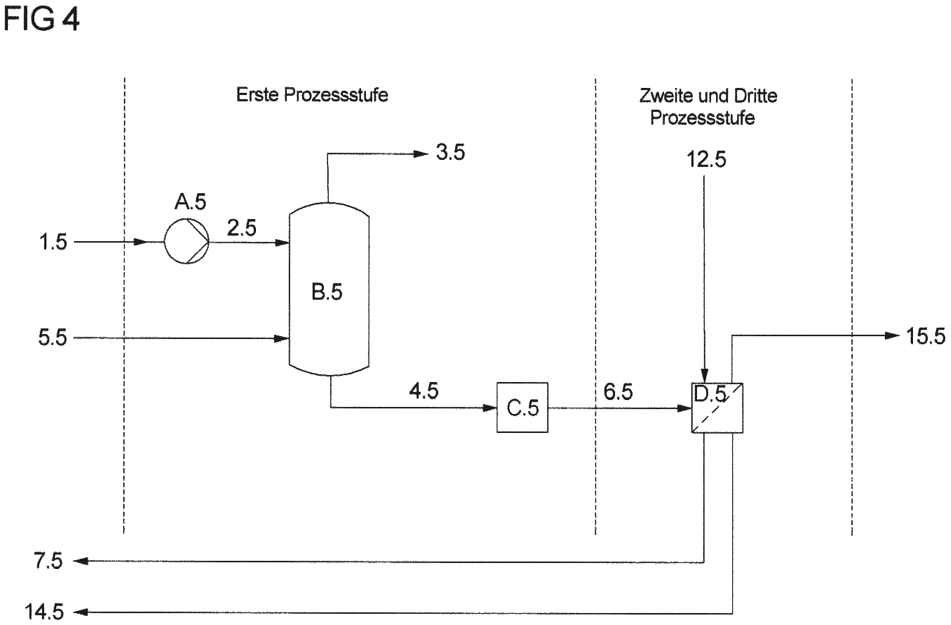

Ein weiteres Ausführungsbeispiel ist in FIG 4 dargestellt.

Schwarzlauge (1.5) mit einem pH-Wert von 13 wird aus der Eindampfanlage eines Zellstoffwerks mit 30 Ma.-% Trockenstoffanteil entnommen und der ersten Prozessstufe zugeführt. Mittels einer Pumpe (A.5) wird eine Druckerhöhung auf etwa 30 bar vorgenommen und die Schwarzlauge (2.5) einem Reaktor (B.5) zugeführt in dem die hydrothermale Karbonisierung bei einer Temperatur von 230°C über eine Dauer von 3 Stunden stattfindet. Der Reaktor (B.5) wird mit Heizdampf (5.5) beheizt und so die Reaktionstemperatur von 230 °C eingestellt. Während der Reaktion entstehende Prozessgase ($CO_2$, $CH_4$, CO, $H_2S$, etc.) werden als Off-gas (3.5) druckgeregelt aus dem Reaktor (B.5) abgeleitet und aus dem Prozess abgeführt. Während der hydrothermalen Karbonisierung fällt ungelöstes karbonisiertes Lignin aus der Schwarzlauge aus. Die karbonisierte Schwarzlauge und das ausgefallene ungelöste karbonisierte Lignin (4.5) werden aus dem Reaktor (B.5) abgeführt und in einer Entspannung-/Rückkühlungs-Vorrichtung (C.5) auf Umgebungsdruck entspannt und auf etwa 60°C zurückgekühlt. Die karbonisierte Schwarzlauge und das ausgefallene ungelöste karbonisierte Lignin (6.5) werden anschließend der Entwässerung, einer Membranfilterpresse (D.5) in der zweiten Prozessstufe zugeführt. In der Membranfilterpresse (D.5) wird ein Filterkuchen bestehend aus festem Kohlenstoff und verbleibender karbonisierter Schwarzlauge gewonnen. Die von dem Filterkuchen abgetrennte karbonisierte Schwarzlauge (7.5) wird zurück in das Zellstoffwerk geführt. Der Filterkuchen wird anschließend in der dritten Prozessstufe, welche in die zweite Prozessstufe integriert ist, in der Membranfilterpresse (D.5) in einer Verdrängungswäsche durch Zugabe von Wasser (12.5) gewaschen. Die Waschflüssigkeit (14.5) wird aus dem Prozess abgeführt. Der gewaschene Filterkuchen wird als ungelöstes karbonisiertes Lignin (15.5) aus der Entwässerung (D.5) abgeführt.

Ausführunasbeispiel 6:

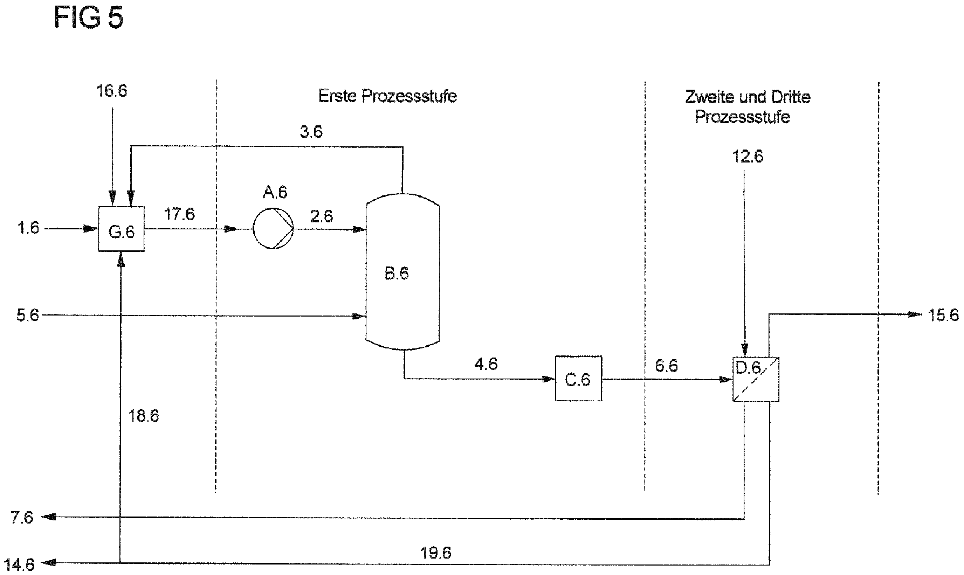

Ein weiteres Ausführungsbeispiel ist in FIG 5 dargestellt.

Schwarzlauge (1.6) mit einem pH-Wert von etwa 13 wird aus der Eindampfanlage eines Zellstoffwerks mit 40 Ma.-% Trockenstoffanteil entnommen und einer Vorrichtung zur Vermischung und Reduzierung des pH-Wertes (G.6) zugeführt. In der Vorrichtung zur Vermischung und Reduzierung des pH-Wertes (G.6) wird die Schwarzlauge mit Waschwasser (18.6) auf einen Trockenstoffgehalt von 30 Ma.-% verdünnt und der pH-Wert der Schwarzlauge durch die Einleitung von Off-Gas (3.6) und technischem $CO_2$ (16.6) auf etwa 10.5 eingestellt. Die verdünnte und im pH-Wert reduzierte Schwarzlauge (17.6) wird der ersten Prozessstufe zugeführt. Mittels einer Pumpe (A.6) wird eine Druckerhöhung auf etwa 30 bar vorgenommen und die Schwarzlauge (2.6) einem Reaktor (B.6) zugeführt in dem die hydrothermale Karbonisierung bei einer Temperatur von 230°C über eine Dauer von 3 Stunden stattfindet. Der Reaktor (B.6) wird mit Heizdampf (5.6) beheizt und so die Reaktionstemperatur von 230 °C eingestellt. Während der Reaktion entstehende Prozessgase ($CO_2$, $CH_4$, CO, $H_2S$, etc.) werden als Off-gas (3.6) druckgeregelt aus dem Reaktor (B.5) abgeführt und der Vorrichtung zur Vermischung und Reduzierung des pH-Wertes (G.6) zugeführt. Während der hydrothermalen Karbonisierung fällt ungelöstes karbonisiertes Lignin aus der Schwarzlauge aus und der pH-Wert sinkt auf etwa 9,5 ab. Die karbonisierte Schwarzlauge und das ausgefallene ungelöste karbonisierte Lignin (4.6) werden aus dem Reaktor (B.6) abgeführt und in einer Entspannung-/Rückkühlungs-Vorrichtung (C.6) auf Umgebungsdruck entspannt und auf etwa 60°C zurückgekühlt. Die karbonisierte Schwarzlauge und das ausgefallene ungelöste karbonisierte Lignin (6.6) werden anschließend der Entwässerung, einer Membranfilterpresse (D.6) in der zweiten Prozessstufe zugeführt. In der Membranfilterpresse (D.6) wird ein Filterkuchen bestehend aus festem Kohlenstoff und verbleibender karbonisierter Schwarzlauge gewonnen. Die von dem Filterkuchen abgetrennte karbonisierte Schwarzlauge (7.6) wird mit einem pH-Wert von etwa 9,5 zurück in das Zellstoffwerk geführt. Der Filterkuchen wird anschließend in der dritten Prozessstufe, welche in die zweite Prozessstufe integriert ist, in der Membranfilterpresse (D.6) in einer Verdrängungswäsche durch Zugabe von Wasser (12.6) gewaschen. Der pH-Wert des Wassers (12.6) wurde vor seiner Nutzung als Waschwasser auf einen Wert über 8 eingestellt. Die Waschflüssigkeit (19.6) wird teilweise aus dem Prozess abgeführt (14.6) und teilweise zur Verdünnung der Schwarzlauge in der Vorrichtung zur Vermischung und Reduzierung des pH-Wertes (G.6) eingesetzt. Der gewaschene Filterkuchen wird als ungelöstes karbonisiertes Lignin (15.6) aus der Entwässerung (D.6) abgeführt.

**EP 3 030 598 B1**

**Patentansprüche**

1. Verfahren zur Gewinnung von ungelöstem karbonisiertem Lignin aus Schwarzlauge aus einem alkalischen Fraktionierungsprozess, **dadurch gekennzeichnet, dass**

   - Schwarzlauge mit einem Trockenstoffgehalt von mindestens 20 Ma.-% in einer ersten Prozessstufe (hydrothermale Karbonisierung) bei einer Temperatur zwischen 180°C und 300°C einer hydrothermalen Karbonisierung unterzogen wird, wobei

      ∘ der pH-Wert der Schwarzlauge vor oder während der hydrothermalen Karbonisierung oder der pH-Wert der karbonisierten Schwarzlauge nach der hydrothermalen Karbonisierung so weit reduziert wird, dass mit einer Ausbeute von mindestens 20 Ma.-% ungelöstes karbonisiertes Lignin gewonnen wird,
      ∘ wobei der pH-Wert der Schwarzlauge vor und während der hydrothermalen Karbonisierung und der pH-Wert der karbonisierten Schwarzlauge nach der hydrothermalen Karbonisierung mindestens einen Wert von 7 haben, wodurch eine alkalische hydrothermale Karbonisierung erfolgt,

   - das ungelöste karbonisierte Lignin in einer zweiten Prozessstufe (Entwässerung) weitgehend von der karbonisierten Schwarzlauge abgetrennt wird und die karbonisierte Schwarzlauge dem alkalischen Fraktionierungsprozess wieder zugeführt wird,
   - die anorganischen Bestandteile des von der karbonisierten Schwarzlauge abgetrennten ungelösten karbonisierten Lignins in einer dritten Prozessstufe (Reinigung) durch eine Wäsche reduziert werden und
   - das ungelöste karbonisierte Lignin mit einem Trockenstoffgehalt von mehr als 40 Ma.-% gewonnen wird.

2. Verfahren nach Anspruch 1, **dadurch gekennzeichnet, dass** ein Ascheanteil des ungelösten karbonisierten Lignins durch die Wäsche in der dritten Prozessstufe auf maximal 10 Ma.-% abgesenkt wird.

3. Verfahren nach einem oder mehreren der vorherigen Ansprüche, **dadurch gekennzeichnet, dass** die Schwarzlauge in der ersten Prozessstufe mit einem Trockenstoffgehalt von mindestens 25 Ma.-%, insbesondere von mindestens 30 Ma.-% zugeführt wird.

4. Verfahren nach einem oder mehreren der vorherigen Ansprüche, **dadurch gekennzeichnet, dass** die Schwarzlauge in der ersten Prozessstufe (hydrothermale Karbonisierung) mindestens 60 Minuten und maximal 600 Minuten, bevorzugt in einem Bereich von 120 bis 240 Minuten einer hydrothermalen Karbonisierung unterzogen wird.

5. Verfahren nach einem oder mehreren der vorherigen Ansprüche, **dadurch gekennzeichnet, dass** der pH-Wert der Schwarzlauge während der hydrothermalen Karbonisierung um mindestens eine Einheit und maximal auf einer pH-Wert von 8 absinkt.

6. Verfahren zur Gewinnung von ungelöstem karbonisierten Lignin aus Schwarzlauge, insbesondere nach einem oder mehreren der vorherigen Ansprüche, **dadurch gekennzeichnet, dass**

   - Schwarzlauge mit einem Trockenstoffgehalt von mindestens 20 Ma.-% aus einem Zellstoffwerk in einer ersten Prozessstufe (hydrothermale Karbonisierung) bei einer Temperatur zwischen 180°C und 300°C mindestens 60 Minuten und maximal 600 Minuten einer hydrothermalen Karbonisierung unterzogen wird, wobei

      ∘ der pH-Wert der Schwarzlauge während der hydrothermalen Karbonisierung um mindestens eine Einheit und maximal auf einer pH-Wert von 8 absinkt und
      ∘ dabei aus der Schwarzlauge mit einer Ausbeute von mindestens 20 Ma.-% ungelöstes karbonisiertes Lignin ausfällt,

   - das ungelöste karbonisierte Lignin in einer zweiten Prozessstufe (Entwässerung) weitgehend von der karbonisierten Schwarzlauge abgetrennt wird,
   - die karbonisierte Schwarzlauge dem Zellstoffwerk wieder zugeführt wird,
   - die anorganischen Bestandteile des von der karbonisierten Schwarzlauge abgetrennten ungelösten karbonisierten Lignins in einer dritten Prozessstufe (Reinigung) durch eine Wäsche reduziert werden und
   - das ungelöste karbonisierte Lignin mit einem Trockenstoffgehalt von mehr als 40 Masseprozent gewonnen wird.

7. Verfahren nach einem oder mehreren der vorherigen Ansprüche, **dadurch gekennzeichnet, dass** die Dauer

**16**

und/oder Temperatur der hydrothermalen Karbonisierung so gewählt wird, dass der pH-Wert der karbonisierten Schwarzlauge um mindestens eine Einheit unter dem pH-Wert der Schwarzlauge vor der hydrothermalen Karbonisierung liegt.

8. Verfahren nach einem oder mehreren der vorherigen Ansprüche, **dadurch gekennzeichnet, dass** die Ausbeute von mindestens 20 Ma.-% an ungelöstem karbonisiertem Lignin zu mindestens 50% während der hydrothermalen Karbonisierung erzielt wird.

9. Verfahren nach einem oder mehreren der vorherigen Ansprüche, **dadurch gekennzeichnet, dass** das ungelöste karbonisierte Lignin in der zweiten Prozessstufe (Entwässerung) weitgehend von der karbonisierten Schwarzlauge abgetrennt wird und hierbei ein Filterkuchen gewonnen wird.

10. Verfahren nach einem oder mehreren der vorherigen Ansprüche, **dadurch gekennzeichnet, dass** die dritte Prozessstufe innerhalb der zweiten Prozessstufe als Filterkuchenwäsche realisiert wird oder die dritte Prozessstufe im Anschluss an die zweite Prozessstufe realisiert wird

11. Verfahren nach einem oder mehreren der vorherigen Ansprüche, **dadurch gekennzeichnet, dass** der pH-Wert vor der hydrothermalen Karbonisierung so weit reduziert wird, dass Lignin aus der Schwarzlauge ausfällt, insbesondere durch die Erhöhung des Anteils an Biomasse in der Schwarzlauge vor und/oder während der hydrothermalen Karbonisierung

12. Verfahren nach einem oder mehreren der vorherigen Ansprüche, **dadurch gekennzeichnet, dass**

- der Anteil des chemischen Elements Kohlenstoff in dem ungelösten karbonisierten Lignin bezogen auf die aschefreie und trockene Masse bei mindestens 60 Massenprozent liegt,
- der Anteil des chemischen Elements Kohlenstoff in dem ungelösten karbonisierten Lignin bezogen auf die aschefreie und trockene Masse um mindestens 5 Masseprozent höher liegt als der Anteil des chemischen Elements Kohlenstoff in einem aschefreien und trockenen Rückstand, der bei einer kompletten Eindampfung der als Ausgangsstoff verwendeten Schwarzlauge gewonnen wird,
- der Ascheanteil des ungelösten karbonisierten Lignins bezogen auf die trockene Masse bei maximal 10 Masseprozent liegt,
- der Ascheanteil des ungelösten karbonisierten Lignins bezogen auf die trockene Masse um mindestens 50 Masseprozent niedriger liegt als der Ascheanteil des trockenen Rückstandes, der bei einer kompletten Eindampfung der als Ausgangsstoff verwendeten Schwarzlauge gewonnenen wird,
- die Erweichungstemperatur des ungelösten karbonisierten Lignins bei mindestens 200 °C liegt und
- der Trockenstoffgehalt des ungelösten karbonisierten Lignins bei mindestens 40 Masseprozent liegt.

13. Verfahren nach einem oder mehreren der vorherigen Ansprüche, **dadurch gekennzeichnet, dass**

- der Anteil des chemischen Elements Kohlenstoff in einem aus der karbonisierten Schwarzlauge gewonnenen aschefreien und trockenen Rückstand bei mindestens 60 Massenprozent liegt und
- der Anteil des chemischen Elements Kohlenstoff in einem aus der karbonisierten Schwarzlauge gewonnenen aschefreien und trockenen Rückstand um mindestens 5 Masseprozent höher liegt als der Anteil des chemischen Elements Kohlenstoff in einem aschefreien und trockenen Rückstand, der bei einer kompletten Eindampfung der aus der als Ausgangsstoff verwendeten Schwarzlauge gewonnenen wird.

**Claims**

1. Method for extracting undissolved carbonized lignin from black liquor from an alkaline fractionation process, **characterized in that**

- black liquor having a dry matter content of at least 20 mass% is subjected in a first process step (hydrothermal carbonization) to a hydrothermal carbonization at a temperature between 180°C and 300°C, wherein

o the pH of the black liquor, before or during the hydrothermal carbonization, or the pH of the carbonized black liquor after the hydrothermal carbonization, is reduced to the extent that undissolved carbonized lignin is extracted with a yield of at least 20 mass%,

o wherein the pH of the black liquor, before and during the hydrothermal carbonization, and the pH of the carbonized black liquor after the hydrothermal carbonization, are at least 7, as a result of which an alkaline hydrothermal carbonization takes place,

- the undissolved carbonized lignin in a second process step (dewatering) is substantially separated off from the carbonized black liquor and the carbonized black liquor is fed back to the alkaline fractionation process,
- the inorganic components of the undissolved carbonized lignin separated off from the carbonized black liquor are reduced in a third process step (purification) by a wash and
- the undissolved carbonized lignin is extracted with a dry matter content of greater than 40 mass%.

2. Method according to Claim 1, **characterized in that** an ash fraction of the undissolved carbonized lignin is lowered by the wash in the third process step to a maximum of 10 mass%.

3. Method according to one or more of the preceding claims, **characterized in that** the black liquor is fed in the first process step at a dry matter content of at least 25 mass%, in particular at least 30 mass%.

4. Method according to one or more of the preceding claims, **characterized in that** the black liquor is subjected to a hydrothermal carbonization in the first process step (hydrothermal carbonization) for at least 60 minutes and for a maximum of 600 minutes, preferably in a range from 120 to 240 minutes.

5. Method according to one or more of the preceding claims, **characterized in that** the pH of the black liquor falls by at least one unit and at most to a pH of 8 during the hydrothermal carbonization.

6. Method for extracting undissolved carbonized lignin from black liquor, in particular according to one or more of the preceding claims, **characterized in that**

- black liquor having a dry matter content of at least 20 mass% from a chemical pulp factory is subjected in a first process step (hydrothermal carbonization) to a hydrothermal carbonization at a temperature between 180°C and 300°C for at least 60 minutes and for a maximum of 600 minutes, wherein

  ◦ the pH of the black liquor falls by at least one unit and at most to a pH of 8 during the hydrothermal carbonization and
  ◦ in this case undissolved carbonized lignin precipitates out of the black liquor at a yield of at least 20 mass%,

- the undissolved carbonized lignin in a second process step (dewatering) is substantially separated off from the carbonized black liquor,
- the carbonized black liquor is fed back to the chemical pulp factory,
- the inorganic components of the undissolved carbonized lignin separated off from the carbonized black liquor are reduced in a third process step (purification) by a wash and
- the undissolved carbonized lignin is extracted with a dry matter content of more than 40 percent by mass.

7. Method according to one or more of the preceding claims, **characterized in that** the period and/or temperature of the hydrothermal carbonization is selected in such a manner that the pH of the carbonized black liquor is below the pH of the black liquor before the hydrothermal carbonization by at least one unit.

8. Method according to one or more of the preceding claims, **characterized in that** the yield of at least 20 mass% of undissolved carbonized lignin is at least 50% achieved during the hydrothermal carbonization.

9. Method according to one or more of the preceding claims, **characterized in that** the undissolved carbonized lignin is substantially separated off from the carbonized black liquor in the second process step (dewatering) and a filter cake is extracted in the course of this.

10. Method according to one or more of the preceding claims, **characterized in that** the third process step is implemented within the second process step as filter cake wash or the third process step is implemented subsequently to the second process step.

11. Method according to one or more of the preceding claims, **characterized in that** the pH before the hydrothermal carbonization is reduced to the extent that lignin precipitates out of the black liquor, in particular by increasing the fraction of biomass in the black liquor before and/or during the hydrothermal carbonization.

12. Method according to one or more of the preceding claims, **characterized in that**

- the fraction of the chemical element carbon in the undissolved carbonized lignin based on the ash-free and dry mass is at least 60 percent by mass,
- the fraction of the chemical element carbon in the undissolved carbonized lignin based on the ash-free and dry mass is higher by at least 5 percent by mass than the fraction of the chemical element carbon in an ash-free and dry residue which is extracted in a complete evaporation of the black liquor used as starting material,
- the ash fraction of the undissolved carbonized lignin based on the dry mass is a maximum of 10 percent by mass,
- the ash fraction of the undissolved carbonized lignin based on the dry mass is lower by at least 50 percent by mass than the ash fraction of the dry residue which is extracted in a complete evaporation of the black liquor used as starting material,
- the softening temperature of the undissolved carbonized lignin is at least 200°C and
- the dry matter content of the undissolved carbonized lignin is at least 40 percent by mass.

13. Method according to one or more of the preceding claims, **characterized in that**

- the fraction of the chemical element carbon in an ash-free and dry residue extracted from the carbonized black liquor is at least 60 percent by mass and
- the fraction of the chemical element carbon in an ash-free and dry residue extracted from the carbonized black liquor is higher by at least 5 percent by mass than the fraction of the chemical element carbon in an ash-free and dry residue which is extracted in a complete evaporation of the black liquor used as starting material.

## Revendications

1. Procédé d'obtention de lignine carbonisée non dissoute à partir d'une liqueur noire issue d'un procédé de fractionnement alcalin, **caractérisé en ce que**

- une liqueur noire ayant une teneur en matières sèches d'au moins 20 % en masse est soumise lors d'une première étape de procédé (carbonisation hydrothermale) à une carbonisation hydrothermale à une température comprise entre 180 °C et 300 °C,
- le pH de la liqueur noire avant ou pendant la carbonisation hydrothermale ou le pH de la liqueur noire carbonisée après la carbonisation hydrothermale étant réduit de telle sorte que de la lignine carbonisée non dissoute soit obtenue en un rendement d'au moins 20 % en masse,
- le pH de la liqueur noire avant et pendant la carbonisation hydrothermale et le pH de la liqueur noire carbonisée après la carbonisation hydrothermale ayant au moins une valeur de 7, une carbonisation hydrothermale alcaline ayant ainsi lieu,
- la lignine carbonisée non dissoute est lors d'une deuxième étape de procédé (déshydratation) essentiellement séparée de la liqueur noire carbonisée, et la liqueur noire carbonisée est réintroduite dans le procédé de fractionnement alcalin,
- les constituants inorganiques de la lignine carbonisée non dissoute séparée de la liqueur noire carbonisée sont réduits par un lavage lors d'une troisième étape de procédé (purification), et
- la lignine carbonisée non dissoute est obtenue avec une teneur en matières sèches de plus de 40 % en masse.

2. Procédé selon la revendication 1, **caractérisé en ce qu'**une proportion de cendres de la lignine carbonisée non dissoute est réduite à au plus 10 % en masse par le lavage lors de la troisième étape de procédé.

3. Procédé selon une ou plusieurs des revendications précédentes, **caractérisé en ce que** la liqueur noire est introduite dans la première étape de procédé avec une teneur en matières sèches d'au moins 25 % en masse, notamment d'au moins 30 % en masse.

4. Procédé selon une ou plusieurs des revendications précédentes, **caractérisé en ce que** la liqueur noire est soumise à une carbonisation hydrothermale lors de la première étape de procédé (carbonisation hydrothermale) pendant au moins 60 minutes et au plus 600 minutes, de préférence dans une plage allant de 120 à 240 minutes.

5. Procédé selon une ou plusieurs des revendications précédentes, **caractérisé en ce que** le pH de la liqueur noire diminue pendant la carbonisation hydrothermale d'au moins une unité et au plus à un pH de 8.

6. Procédé d'obtention de lignine carbonisée non dissoute à partir d'une liqueur noire, notamment selon une ou plusieurs des revendications précédentes, **caractérisé en ce que**

- une liqueur noire ayant une teneur en matières sèches d'au moins 20 % en masse issue d'une usine de pâte à papier est soumise lors d'une première étape de procédé (carbonisation hydrothermale) à une carbonisation hydrothermale à une température comprise entre 180 °C et 300 °C pendant au moins 60 minutes et au plus 600 minutes,
- le pH de la liqueur noire diminuant d'au moins une unité et au plus à un pH de 8 pendant la carbonisation hydrothermale, et
- de la lignine carbonisée non dissoute précipitant à partir de la liqueur noire en un rendement d'au moins 20 % en masse,
- la lignine carbonisée non dissoute est lors d'une deuxième étape de procédé (déshydratation) essentiellement séparée de la liqueur noire carbonisée,
- la liqueur noire carbonisée est réintroduite dans l'usine de pâte à papier,
- les constituants inorganiques de la lignine carbonisée non dissoute séparée de la liqueur noire carbonisée sont réduits par un lavage lors d'une troisième étape de procédé (purification), et
- la lignine carbonisée non dissoute est obtenue avec une teneur en matières sèches de plus de 40 pour cent en masse.

7. Procédé selon une ou plusieurs des revendications précédentes, **caractérisé en ce que** la durée et/ou la température de la carbonisation hydrothermale sont choisies de telle sorte que le pH de la liqueur noire carbonisée se situe au moins une unité en dessous du pH de la liqueur noire avant la carbonisation hydrothermale.

8. Procédé selon une ou plusieurs des revendications précédentes, **caractérisé en ce que** le rendement d'au moins 20 % en masse en lignine carbonisée non dissoute est atteint à hauteur d'au moins 50 % pendant la carbonisation hydrothermale.

9. Procédé selon une ou plusieurs des revendications précédentes, **caractérisé en ce que** la lignine carbonisée non dissoute est essentiellement séparée de la liqueur noire carbonisée lors de la deuxième étape de procédé (déshydratation), et un gâteau de filtration est ainsi obtenu.

10. Procédé selon une ou plusieurs des revendications précédentes, **caractérisé en ce que** la troisième étape de procédé est réalisée pendant la deuxième étape de procédé sous la forme d'un lavage du gâteau de filtration, ou la troisième étape de procédé est réalisée après la deuxième étape de procédé.

11. Procédé selon une ou plusieurs des revendications précédentes, **caractérisé en ce que** le pH est réduit avant la carbonisation hydrothermale de telle sorte que de la lignine précipite à partir de la liqueur noire, notamment par augmentation de la proportion de biomasse dans la liqueur noire avant et/ou pendant la carbonisation hydrothermale.

12. Procédé selon une ou plusieurs des revendications précédentes, **caractérisé en ce que**

- la proportion de l'élément chimique carbone dans la lignine carbonisée non dissoute par rapport à la masse sèche et exempte de cendres est d'au moins 60 pour cent en masse,
- la proportion de l'élément chimique carbone dans la lignine carbonisée non dissoute par rapport à la masse sèche et exempte de cendres est au moins 5 pour cent en masse supérieure à la proportion de l'élément chimique carbone dans un résidu sec et exempt de cendres, qui est obtenu lors d'une évaporation complète de la liqueur noire utilisée en tant que matière première,
- la proportion de cendres de la lignine carbonisée non dissoute par rapport à la masse sèche est d'au plus 10 pour cent en masse,
- la proportion de cendres de la lignine carbonisée non dissoute par rapport à la masse sèche est au moins 50 pour cent en masse plus faible que la proportion de cendres du résidu sec, qui est obtenu lors d'une évaporation complète de la liqueur noire utilisée en tant que matière première,
- la température de ramollissement de la lignine carbonisée non dissoute est d'au moins 200 °C, et
- la teneur en matières sèches de la lignine carbonisée non dissoute est d'au moins 40 pour cent en masse.

13. Procédé selon une ou plusieurs des revendications précédentes, **caractérisé en ce que**

**EP 3 030 598 B1**

- la proportion de l'élément chimique carbone dans un résidu sec et exempt de cendres obtenu à partir de la liqueur noire carbonisée est d'au moins 60 pour cent en masse, et
- la proportion de l'élément chimique carbone dans un résidu sec et exempt de cendres obtenu à partir de la liqueur noire carbonisée est au moins 5 pour cent en masse plus élevée que la proportion de l'élément chimique carbone dans un résidu sec et exempt de cendres, qui est obtenu lors d'une évaporation complète de la liqueur noire utilisée en tant que matière première.

# FIG 1

# FIG 2

FIG 3

Erste Prozessstufe     Zweite Prozessstufe     Dritte Prozessstufe

# FIG 4

Erste Prozessstufe

Zweite und Dritte Prozessstufe

EP 3 030 598 B1

# FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013070130 A1
- WO 2013002687 A1
- WO 2012177198 A1
- WO 2010143997 A1
- WO 2009104995 A1
- WO 2010112230 A1
- WO 2012091906 A1